# EUROPÄISCHE PATENTSCHRIFT

(11) **EP 3 222 906 B1**
(45) Veröffentlichungstag und Bekanntmachung des Hinweises auf die Patenterteilung: **09.03.2022**
(21) Anmeldenummer: 17162306.9
(22) Anmeldetag: 22.03.2017
(51) Int. Cl.: B60Q 1/18, B60Q 1/12, B60Q 1/22, B60Q 1/26, B60Q 1/38, F21S 41/143, F21S 41/151, F21S 41/27, F21S 41/32, F21S 41/663, F21S 43/14, F21S 43/40, F21W 102/19

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR VÉHICULE AUTOMOBILE

(30) Priorität: 23.03.2016 AT 502382016
(43) Veröffentlichungstag der Anmeldung: 27.09.2017
(73) Patentinhaber: ZKW Group GmbH, 3250 Wieselburg (AT)
(72) Erfinder: Kemetmüller, Matthias, 1220 Wien (AT); Eichinger, Bernd, 3375 Krummnussbaum (AT); Bauer, Friedrich, 3252 Bergland (AT)
(74) Vertreter: Patentanwaltskanzlei Matschnig & Forsthuber OG

(56) Entgegenhaltungen:
- EP-A1- 1 659 028
- WO-A1-2016/027315
- DE-A1-102011 105 983
- DE-A1-102013 020 753
- DE-A1-102013 107 355
- DE-A1-102015 215 287
- US-A1- 2008 123 357
- US-A1- 2011 128 141
- US-A1- 2013 058 116
- US-A1- 2014 241 000
- US-A1- 2014 252 949

## Beschreibung

Die Erfindung betrifft eine Beleuchtungsvorrichtung, insbesondere Bodenprojektions-Beleuchtungsvorrichtung, für ein Kraftfahrzeug zur Erzeugung von zumindest einer Beleuchtungsfunktion, insbesondere einer Bodenprojektions-Beleuchtungsfunktion. Vorrichtungen zur Erzeugung von Bodenprojektions-Beleuchtungen sind im Kontext einer Kurvenlichtfunktion und im Kontext einer Blinklichtfunktion aus DE 10 2011 105983 A1 beziehungsweise aus US 2011/128141 A1 bekannt.

Weiters betrifft die Erfindung eine oben genannte Beleuchtungsvorrichtung, welche als Kraftfahrzeugscheinwerfer ausgebildet ist.

Schließlich betrifft die Erfindung noch einen Kraftfahrzeugscheinwerfer, welcher eine oder mehrere der oben genannten Beleuchtungsvorrichtungen aufweist.

Beleuchtungsfunktionen für ein Kraftfahrzeug umfassen beispielsweise typische Lichtfunktionen wie Fernlicht, Abblendlicht, usw. sowie Signalisierungsfunktionen, z.B. Fahrtrichtungsanzeiger (Blinker), Tagfahrlicht, etc. Lichtfunktionen, insbesondere Signalisierungsfunktionen wie die oben aufgeführten, können von Verkehrsteilnehmern, insbesondere von Verkehrsteilnehmern, welche sich (sehr) nahe bei dem Kraftfahrzeug befinden, nur wahrgenommen werden, wenn diese direkt auf das Fahrzeug bzw. die Beleuchtungsvorrichtung blicken. Verkehrsteilnehmer, welche sich nicht aktiv auf den Verkehr konzentrieren, beispielsweise Fußgänger, können eine solche Beleuchtungsfunktion leicht übersehen und merken beispielsweise nicht, wenn ein Fahrzeug einen Abbiegevorgang anzeigt. Insbesondere tritt dies häufig auf, wenn Fußgänger zu Boden oder auf ihr Smartphone blicken.

Es ist eine Aufgabe der vorliegenden Erfindung, eine Lösung für dieses Problem anzugeben.

Diese Aufgabe wird mit einer eingangs erwähnten Beleuchtungsvorrichtung dadurch gelöst, dass erfindungsgemäß die Beleuchtungsvorrichtung sämtliche Merkmale des Anspruchs 1 umfasst.

Beispielsweise ist vorgesehen, dass die Lichtsegmente in der Bodenprojektion und/oder in Schirmprojektion derart unmittelbar nebeneinander liegen, dass die Lichtsegmente von benachbarten Projektionsoptiken aneinander angrenzen oder sich teilweise überlappen.

Es kann auch vorgesehen sein, dass die Lichtsegmente in der Bodenprojektion und/oder in Schirmprojektion derart unmittelbar nebeneinander liegen, dass die Lichtsegmente von benachbarten Projektionsoptiken zueinander beabstandet sind.

Es können auch Mischformen vorgesehen sein, bei welchen nebeneinander liegende Lichtsegmente einen Abstand zueinander aufweisen, andere einander überlappen, und wieder andere unmittelbar aneinander angrenzen. Es sind beliebige Mischformen aus diesen drei Möglichkeiten denkbar.

Weiters wird die oben genannte Aufgabe mit einem Kraftfahrzeugscheinwerfer oder einer Kraftfahrzeugheckleuchte gelöst, welcher bzw. welche eine oder mehrere vorstehend beschriebene Beleuchtungsvorrichtungen aufweist.

Mit jeder Lichtquelle kann somit über eine zugeordnete Projektionsoptik ein Lichtsegment einer definierten Beleuchtungsfunktion erzeugt werden, und dadurch, dass jede Lichtquelle unabhängig von den anderen Lichtquellen ein- und ausgeschaltet werden kann, und vorzugsweise, wenn es sich um dimmbare Lichtquellen handelt, auch unabhängig von den anderen Lichtquellen gedimmt werden, können unterschiedliche Lichtsegmente in einen Bereich unmittelbar vor der Beleuchtungsvorrichtung und somit in Fahrtrichtung des Kraftfahrzeugs vor dem Kraftfahrzeug, insbesondere vor einem Kraftfahrzeugscheinwerfer, vorzugsweise einem Kraftfahrzeugfrontscheinwerfer, sowie entgegen der Fahrtrichtung hinter dem Kraftfahrzeug, insbesondere hinter einer Kraftfahrzeugheckleuchte, projiziert werden, wo sie von anderen Verkehrsteilnehmern auf der Fahrbahn wahrgenommen werden können.

Der Begriff "Fahrtrichtung" bezeichnet in diesem Kontext die Richtung, in der sich ein angetriebenes Kraftfahrzeug wie konstruktiv vorgesehen bewegt. Ein technisch mögliches Rückwärtsfahren wird in diesem Zusammenhang nicht als Fahrtrichtung definiert.

Der oben verwendete Begriff "benachbart" bezieht sich dabei auf Projektionsoptiken, welche Lichtsegmente einer bestimmten Beleuchtungsfunktion erzeugen. Zwischen zwei solchen "benachbarten" Projektionsoptiken können sich eine oder mehrere Projektionsoptiken befinden, welche eine andere Beleuchtungsfunktion erzeugen.

Bei den erzeugbaren Beleuchtungsfunktionen, d.h. Lichtfunktionen oder Signalisierungsfunktion, handelt es sich beispielsweise nicht um gesetzliche definierte Beleuchtungsfunktionen, sondern um Zusatz-Beleuchtungsfunktionen, etwa Zusatz-Lichtfunktionen oder Zusatz-Signalisierungsfunktionen, welche zusätzlich zu den gesetzlichen vorgeschriebenen Beleuchtungsfunktion realisiert werden können.

Es kann aber auch vorgesehen sein, dass die erfindungsgemäß erzeugten Beleuchtungsfunktionen selbst bereits die gesetzlichen Anforderungen an die entsprechende Beleuchtungsfunktion erfüllen.

Die Projektionsoptiken sind vorzugsweise derart angeordnet, z.B. zueinander verdreht, und/oder entsprechend ausgebildet, dass der aus ihnen austretende Lichtstrom jeder Projektionsoptik auf einen anderen Bereich auf dem Boden gerichtet ist. Auf diese Weise kann gemeinsam mit den oben beschriebenen Merkmalen eine Beleuchtungsfunktion in Form einer Animation realisiert werden, z.B. ein über die Fahrbahn wandernder, leuchtender "Cursor" oder ein auf der Fahrbahn wachsender "Cursor".

Beispielsweise ist vorgesehen, dass eine Beleuchtungsfunktion eine Lichtfunktion, z.B. Abbiegelicht-Bodenprojektionsfunktion (welche die gesetzlichen Anforderungen an ein Abbiegelicht erfüllt) oder eine Zusatz-Abbiegelicht-Bodenprojektionsfunktion (welche die gesetzlichen Anforderungen an ein Abbiegelicht nicht erfüllt), ist.

Erfndungsgemäß ist vorgesehen, dass die Beleuchtungsfunktion eine Blinklicht-Bodenprojektionsfunktion (welche die gesetzlichen Anforderungen an ein Blinklicht erfüllt) oder vorzugsweise eine Zusatz-Blinklicht-Bodenprojektionsfunktion (welche die gesetzlichen Anforderungen an ein Blinklicht nicht erfüllt), ist.

Die Zusatz-Blinklicht-Bodenprojektionsfunktion ist zusätzlich zur eigentlichen BlinklichtFunktion vorgesehen. Andere Verkehrsteilnehmer, wie beispielsweise Fußgeher oder Radfahrer, insbesondere solche, die zu Boden blicken, können mit der Blinklicht-Bodenprojektionsfunktion oder der Zusatz- Blinklicht-Bodenprojektionsfunktion besser einen (beabsichtigten) Abbiegevorgang eines Fahrzeuges, welchen dieses mittels Blinken anzeigt, erkennen.

Insbesondere kann auch eine Kombination dieser beiden oben beschriebenen (Zusatz-)Beleuchtungsfunktionen realisiert werden. Insbesondere ist dabei vorgesehen, einen Bodenprojektionsblinker mit einer segmentierten Abbiegelicht-Bodenprojektionsfunktion zu kombinieren, wobei vorzugsweise die orangen (gelben)/weißen Segmente wechselweise geschaltet werden, um keine Mischung der Farben zu haben.

Beispielsweise ist vorgesehen, dass die Lichtsegmente in einer Fahrbahnprojektion keulenförmig ausgebildet sind, wobei sich die Lichtsegmente von der Beleuchtungsvorrichtung weglaufend verbreitern.

Vorzugsweise kann vorgesehen sein, dass sich die Lichtsegmente
- vor der Beleuchtungsvorrichtung bis maximal 10 Meter oder bis maximal 15 Meter oder bis maximal 20 Meter oder bis maximal 25 Meter und/oder
- seitlich, links oder rechts von der Beleuchtungsvorrichtung, bis maximal 10 Meter oder bis maximal 15 Meter oder bis maximal 20 Meter oder bis maximal 25 Meter erstrecken.

Es kann vorgesehen sein, dass die Lichtsegmente in einem Abstand von ca. 0 Meter bis ca. 1,5 Meter vor und/oder seitlich neben der der Beleuchtungsvorrichtung beginnen.

Beispielsweise ist vorgesehen, dass die Lichtsegmente in der Fahrbahnprojektion in einem Winkelbereich von ca. 20° oder -20° zur Fahrzeuglängsachse beginnen und vorzugsweise in einem Winkelbereich von 20° bis einschließlich 90° oder -20° bis einschließlich -90° zur Fahrzeuglängsachse liegen.

Bei den Heckleuchten beträgt der Winkelbereich vorzugsweise 0° bis einschließlich 90°, insbesondere deshalb, da es hier kein durch das Abblendlicht beleuchtetes Vorfeld gibt.

Vorzugsweise gilt, dass die Lichtsegmente unmittelbar an den seitlich äußeren Bereich einer Abblendlichtverteilung anschließen.

Vorzugsweise ist vorgesehen, dass im Fall, dass eine Lichtquelle zwei oder mehr Leuchtdioden umfasst, jede Leuchtdiode dieser Lichtquelle unabhängig von den anderen Leuchtdioden der Lichtquelle angesteuert werden kann.

Jede Leuchtdiode kann somit unabhängig von den anderen Leuchtdioden einer Lichtquelle ein- und ausgeschaltet werden, und vorzugsweise, wenn es sich um dimmbare Leuchtdioden handelt, auch unabhängig von den anderen Leuchtdioden der Lichtquelle gedimmt werden.

Es kann vorgesehen sein, dass jeder Projektionsoptik n Lichtquellen zugeordnet sind, mit n = 1, 2, 3, 4, ...., wobei jede einer Projektionsoptik zugeordnete Lichtquelle zu einer definierten Beleuchtungsfunktion beiträgt. Weist beispielsweise jede Projektionsoptik einer Beleuchtungsvorrichtung genau eine Lichtquelle auf, so kann mit dieser Beleuchtungsvorrichtung genau eine Beleuchtungsfunktion realisiert werden (n = 1). Bei n = 2 können mit der Beleuchtungsvorrichtung zwei Beleuchtungsfunktionen, z.B. eine Signalisierungsfunktion (z.B. eine Blinklicht-Bodenprojektionsfunktion) und eine Lichtfunktion (z.B. eine Abbiegelicht-Bodenprojektionsfunktion) realisiert werden, wobei diese Beleuchtungsfunktionen vorzugsweise auch gleichzeitig in einer Überlagerung realisiert werden können.

Es kann vorgesehen sein, dass jeder Projektionsoptik genau eine Lichtquelle zugeordnet ist, und dass alle Projektionsoptiken Lichtsegmente einer einzigen Beleuchtungsfunktion erzeugen.

Es kann auch vorgesehen sein, dass jeder Projektionsoptik genau eine Lichtquelle zugeordnet ist, und zwei oder mehr Gruppen von Projektionsoptiken vorgesehen sind, wobei jede Gruppe zur Erzeugung einer definierten Beleuchtungsfunktion vorgesehen ist.

Insbesondere kann in diesem Zusammenhang vorgesehen sein, dass die Projektionsoptiken der einzelnen Gruppen alternierend angeordnet sind.

Vorzugsweise ist dabei vorgesehen, dass die Projektionsoptiken jeweils blockweise angeordnet sind, wobei jeder Block jeweils eine Projektionsoptik einer jeden Gruppe enthält, und wobei vorzugsweise innerhalb der Blöcke von Projektionsoptiken die Projektionsoptiken jeweils eine identische Reihenfolge in Hinblick auf ihre Gruppe aufweisen.

Insbesondere wenn für jede Gruppe von Projektionsoptiken identische Optiken verwendet werden, kann dies logistisch und/oder produktionstechnisch Vorteile bringen.

Bei einer Ausführungsform kann vorgesehen sein, dass manche Projektionsoptiken, insbesondere alle Projektionsoptiken, einen Reflektor umfassen oder aus einem Reflektor gebildet sind.

In diesem Zusammenhang kann mit Vorteil vorgesehen sein, dass
- im Falle von einer Lichtquelle für jeden Reflektor diese Lichtquelle in einem Brennpunkt des Reflektors sitzt, oder
- im Falle von zwei oder mehreren Lichtquellen für jeden Reflektor
   o eine Lichtquelle in einem Brennpunkt des Reflektors angeordnet ist und die zumindest eine weitere Lichtquelle außerhalb dieses Brennpunktes angeordnet ist, oder
   ∘ die zwei oder mehreren Lichtquellen symmetrisch, insbesondere symmetrisch in Bezug auf ihre Lichtemissionsflächen, um einen Brennpunkt des Reflektors angeordnet sind.

Bei einer alternativen Ausführungsform kann vorgesehen sein, dass manchen Projektionsoptiken, insbesondere alle Projektionsoptiken, jeweils aus einem lichtleitenden Optikkörpern, z.B. aus TIR(total internal reflection)-Optiken, welche lichtleitenden Optikkörper zumindest einen Lichteinkoppelbereich zum Einkoppeln von Licht von zumindest einer Lichtquelle und zumindest eine Lichtaustrittsfläche zum Auskoppeln des eingekoppelten Lichtes in Form eines Lichtsegmentes umfassen, gebildet sind oder eine solchen lichtleitenden Optikkörper umfassen.

Eine TIR-Optik ist ein lichtleitender Optikkörper, welcher allgemein besteht aus einer Lichteinkoppelfläche bzw. einem Lichteinkoppelbereich, einer Lichtauskoppelfläche bzw. einem Lichtauskoppelbereich, wobei vorzugsweise anschließend an den Lichteinkoppelbereich ein Kollimator vorgesehen ist, welcher das eingekoppelte Licht ausrichtet, beispielsweise die Lichtstrahlen parallel richtet, und einem Reflexionsbereich, welcher das Licht aus dem Kollimator aufnimmt und auf die Lichtauskoppelfläche abstrahlt. Die Umlenkung und Reflexion erfolgt dabei mittels totaler innerer Reflexion (total internal reflection TIR).

Es können aber auch Mischformen vorgesehen sein, bei welcher z.B. eine Gruppe von Projektionsoptiken für eine erste Beleuchtungsfunktion aus lichtleitenden Optiken und eine weitere Gruppe von Projektionsoptiken für eine zweite Beleuchtungsfunktion aus Reflektoren besteht.

Von Vorteil kann es sein, wenn alle Projektionsoptiken oder alle Projektionsoptiken, welche zu einer definierten Beleuchtungsfunktion beitragen, identisch aufgebaut sind.

Außerdem kann vorgesehen sein, dass
- alle Lichtquellen auf einer gemeinsamen Leiterplatte angeordnet sind, oder
- alle Lichtquellen, welche zu einer definierten Beleuchtungsfunktion beitragen, jeweils auf einer gemeinsamen Leiterplatte angeordnet sind, oder
- alle Lichtquellen einer Projektionsoptik jeweils auf einer gemeinsamen Leiterplatte angeordnet sind.

Die Projektionsoptiken sind vorzugsweise zueinander verdreht angeordnet, wobei entweder die Lichtquelle(n) mit der zugehörigen Projektionsoptik mit verdreht ist (sind), oder die Projektionsoptiken sind in Bezug auf die auf Leiterplatte, auf welcher die ihr zugehörige(n) Lichtquelle(n) angeordnet ist (sind), verdreht angeordnet.

Mit Vorteil ist vorgesehen, dass Lichtquellen zur Erzeugung einer Beleuchtungsfunktion weißes Licht oder farbiges, z.B. rotes Licht emittieren können. Bei diesen Beleuchtungsfunktionen handelt sich um Lichtfunktionen wie z.B. ein Abbiegelicht, insbesondere um eine Abbiegelicht-Bodenprojektionsfunktion, insbesondere eine Zusatz-Abbiegelicht-Bodenprojektionsfunktion, für die üblicherweise weißes Licht verwendet wird. Es kann sich aber auch um eine Heckleuchten-Bodenprojektionsfunktion handeln, insbesondere um eine Rückfahrlicht-Bodenprojektionsfunktion oder Zusatz-Rückfahrlicht-Bodenprojektionsfunktion, mit welcher zusätzlich zu einer Rückfahrleuchte noch in einer Bodenprojektion das Zurückfahren eines Kraftfahrzeuges angezeigt werden kann, oder eine Bremslicht-Bodenprojektionsfunktion oder eine Zusatz-Bremslicht-Bodenprojektionsfunktion, mit welcher das Bremsen eines Kraftfahrzeuges zusätzlich noch in einer Bodenprojektion angezeigt werden kann. Für diese Heckleuchten-Bodenprojektionen wird vorzugsweise rotes Licht verwendet.

Wiederum gilt, dass die die jeweilige Bodenprojektionsfunktion die gesetzlichen Anforderungen erfüllt, während die Zusatz-Bodenprojektionsfunktion die gesetzlichen Anforderungen an die jeweilige Lichtfunktion nicht erfüllt.

Es kann auch vorgesehen sein, dass Lichtquellen zur Erzeugung einer Signalisierungsfunktion farbiges Licht, z.B. oranges bzw. gelbe Licht emittieren können. Insbesondere trifft dies z.B. für eine (Zusatz-)Blinklicht-Bodenprojektionsfunktion zu.

Es können auch weiße und orange bzw. gelbe Lichtquellen vorgesehen sein, um z.B. zwei oder mehr Beleuchtungsfunktionen, z.B. eine (Zusatz-)Blinklicht-Bodenprojektionsfunktion und eine Abbiegelicht-Bodenprojektionsfunktion, insbesondere eine Zusatz-Abbiegelicht-Bodenprojektionsfunktion, gemeinsam mit einer Beleuchtungsvorrichtung realisieren zu können.

Signalisierungsfunktionen, insbesondere eine (Zusatz-)Blinklicht-Bodenprojektionsfunktion, können mit Beleuchtungsvorrichtungen, welche in einem vorderen und/oder hinteren Bereich des Kraftfahrzeuges eingebaut sind, realisiert werden.

Beispielsweise kann vorgesehen sein, alle Lichtsegmente einer Beleuchtungsfunktion in einer Schirmprojektion in horizontaler Richtung in etwa dieselbe Ausdehnung, vorzugsweise identische Ausdehnung, aufweisen.

Es kann vorgesehen sein, dass alle Lichtsegmente einer Beleuchtungsfunktion in einer Schirmprojektion in vertikaler Richtung in etwa dieselbe Ausdehnung, vorzugsweise identische Ausdehnung, aufweisen.

Beispielsweise liegen alle Lichtsegmente einer Beleuchtungsfunktion in einer Schirmprojektion in vertikaler Richtung im Wesentlichen auf derselben Höhe.

Es kann vorgesehen sein, dass unterschiedliche Lichtsegmente einer Beleuchtungsfunktion in einer Schirmprojektion unterschiedliche Positionen in horizontaler Richtung aufweisen, wobei vorzugsweise in einer gemeinsamen Schirmprojektion zueinander benachbarte Lichtsegmente sich teilweise, insbesondere in horizontaler Richtung, überlappen.

Beispielsweise wird bei Aktivieren einer einzelnen Beleuchtungsfunktion, welche m Lichtsegmente, mit m ≥ 2, umfasst, die Beleuchtungsvorrichtung ein erstes Lichtsegment erzeugt, welches erste Lichtsegment in der Schirmprojektion den geringsten horizontalen Abstand aller Lichtsegmente von der vertikalen Achse durch den 0-Punkt (= Schnittpunkt H-V-Achse) aufweist, und anschließend, der Reihe nach, das zweite, ...., m-te Lichtsegment aktiviert.

Es kann vorgesehen sein, dass bei Aktivieren eines Lichtsegmentes einer Beleuchtungsfunktion die zuvor bereits aktivierten Lichtsegmente dieser Beleuchtungsfunktion aktiviert bleiben, oder dass vor dem Aktivieren oder gleichzeitig mit dem Aktivieren eines Lichtsegmentes einer Beleuchtungsfunktion das zuvor aktivierte Lichtsegmente deaktiviert wird.

Vorgesehen ist erfindungsgemäß auch, dass bei Aktivieren einer Kombinationsbeleuchtungsfunktion, welche zwei unterschiedliche Beleuchtungsfunktionen umfasst, wobei jede Beleuchtungsfunktion jeweils p Lichtsegmente, mit p ≥ 2, umfasst, und wobei, für q gleich 1 bis p, das q-te Lichtsegment der ersten Beleuchtungsfunktion in einer Bodenprojektion im Wesentlichen denselben Bereich beleuchtet wie das q-te Lichtsegmente der zweiten Beleuchtungsfunktion, und wobei die Lichtsegmente der ersten Beleuchtungsfunktion mit einer ersten Farbe, und die Lichtsegmente der zweiten Beleuchtungsfunktion mit einer zweiten Farbe, erzeugt werden, wobei sich die erste von der zweiten Farbe unterscheidet, p - 1 Lichtsegmente der ersten Beleuchtungsfunktion aktiviert werden, und das fehlende Lichtsegment von der zweiten Beleuchtungsfunktion erzeugt wird, und wobei nach einer definierbaren oder definierten Zeit eines der p - 1 aktivierten Lichtsegmente der ersten Beleuchtungsfunktion sowie das Lichtsegment der zweiten Beleuchtungsfunktion deaktiviert werden, das bisher inaktive Lichtsegment der ersten Beleuchtungsfunktion aktiviert wird, und jenes Lichtsegment der zweiten Beleuchtungsfunktion aktiviert wird, welches dem aktuell deaktivierten Lichtsegment der ersten Beleuchtungsfunktion entspricht.

Erfindungsgemäß ist in diesem Zusammenhang vorgesehen sein, dass bei Aktivieren der Kombinationsbeleuchtungsfunktion vorerst das erste Lichtsegment der zweiten Beleuchtungsfunktion und entsprechend die p - 1 anderen Lichtsegmente der ersten Beleuchtungsfunktion erzeugt werden, und anschließend der Reihe nach das zweite, dritte, ...-p-te Lichtsegment der zweiten Beleuchtungsfunkton und entsprechend die p - 1 Lichtsegmente der ersten Beleuchtungsfunktion aktiviert werden.

Bei der ersten Beleuchtungsfunktion handelt es sich z.B. um eine Abbiegelicht-Bodenprojektionsfunktion oder eine Zusatz-Abbiegelicht-Bodenprojektionsfunktion, die mit weißem Licht erzeugt wird, und bei der zweiten Beleuchtungsfunktion um eine Signalisierungsfunktion, insbesondere eine Blinklicht-Bodenprojektionsfunktion oder eine Zusatz-Blinklicht-Bodenprojektionsfunktion, welche mit gelbem oder orangem Licht erzeugt wird.

Es kann vorgesehen sein, dass nach einem Durchlauf der Aktivierung der Lichtsegmente alle Lichtsegmente deaktiviert werden und gegebenenfalls ein oder mehrere weitere Durchläufe erfolgen.

Beispielsweise beträgt ein Durchlauf der Aktivierung der Lichtsegmente ca. 200 ms.

Es kann vorgesehen sein, dass zwischen zwei Durchläufen der Aktivierung der Lichtsegmente eine Zeitdauer von ca. 200 ms liegt.

Die Aktivierung einer Beleuchtungsfunktion oder einer Kombinationsbeleuchtungsfunktion erfolgt beispielsweise manuell, etwas indem der Fahrer des Kraftfahrzeuges ein Betätigungselement, z.B. eine Blinkerhebel, betätigt, oder automatisch

Eine erfindungsgemäße Beleuchtungsvorrichtung ist beispielsweise als Kraftfahrzeugscheinwerfer, welcher üblicherweise in einem Kraftfahrzeug vorne eingebaut ist, oder als Kraftfahrzeugheckleuchte ausgebildet.

Es kann auch sein, dass ein Kraftfahrzeugscheinwerfer oder eine Kraftfahrzeugheckleuchte eine oder mehrere erfindungsmäße Beleuchtungsvorrichtungen, insbesondere zusammen mit anderen Beleuchtungsvorrichtungen, aufweist.

Die Erfindung betrifft außerdem noch ein Kraftfahrzeug mit zumindest einer erfindungsgemäßen Beleuchtungsvorrichtung und/oder mit zumindest einem erfindungsgemäßen Kraftfahrzeugscheinwerfer und/oder mit zumindest einer erfindungsgemäßen Kraftfahrzeugheckleuchte.

Ein Kraftfahrzeug kann eine oder vorzugsweise mehrere erfindungsgemäße Beleuchtungsvorrichtung aufweisen, je nach zu erzeugenden Beleuchtungsfunktionen können diese im vorderen Bereich oder im hinteren Bereich, aber auch seitlich am Fahrzeug angeordnet sein. Natürlich können auch unterschiedliche Beleuchtungsvorrichtungen am Kraftfahrzeug angeordnet sein.

Im Folgenden ist die Erfindung an Hand der Zeichnung näher erörtert. In dieser zeigt
Fig. 1 beispielhaft ein Kraftfahrzeug in einer Vorderansicht,
Fig. 2 das Kraftfahrzeug aus Figur 1 in einer Ansicht von Oben,
Fig. 3 eine erste Beleuchtungsvorrichtung zur Erzeugung einer Beleuchtungsfunktion,
Fig. 4 eine zweite Beleuchtungsvorrichtung zur Erzeugung einer Beleuchtungsfunktion,
Fig. 5 eine erste erfindungsgemäße Beleuchtungsvorrichtung zur Erzeugung von zwei Beleuchtungsfunktionen,
Fig. 6 eine dritte Beleuchtungsvorrichtung zur Erzeugung einer Beleuchtungsfunktion,
Fig. 7 eine zweite erfindungsgemäße Beleuchtungsvorrichtung zur Erzeugung von zwei Beleuchtungsfunktionen,
Fig. 8 die Beleuchtungsvorrichtung aus Figur 5 in einer perspektivischen Ansicht von Vorne,
Fig. 9 - Fig. 13 mit einer erfindungsgemäßen Beleuchtungsvorrichtung erzeugbare Lichtsegmente in einer Schirmprojektion,
Fig. 14 eine Überlagerung der in den Figuren 9 -13 gezeigten Lichtsegmente,
Fig. 15 - Fig. 19 eine Beleuchtungsfunktion basierend auf den Lichtsegmenten aus den Figuren 9 - 13 in einer Bodenprojektion,
Fig. 20 - Fig. 24 weitere mit einer erfindungsgemäßen Beleuchtungsvorrichtung erzeugbare Lichtsegmente in einer Schirmprojektion,
Fig. 25 - Fig. 29 eine sukzessive Überlagerung der in den Figuren 20 - 24 dargestellten Lichtsegmente in einer Schirmprojektion,
Fig. 30 - Fig. 34 eine Beleuchtungsfunktion basierend auf den Lichtsegmenten aus den Figuren 20- 24 in einer Bodenprojektion,
Fig. 35 - Fig. 39 eine Beleuchtungsfunktion basierend auf einer Überlagerung von "Cursorelementen" wie in den Figuren 25 - 29 dargestellt in einer Bodenprojektion,
Fig. 40 - Fig. 44 eine weitere Beleuchtungsfunktion in einer Bodenprojektion, basierend auf den Lichtsegmenten aus den Figuren 20 - 24, und
Fig. 45 - Fig. 49 die Überlagerung von zwei Beleuchtungsfunktionen, basierend auf Lichtsegmenten entsprechend den Figuren 20 - 24.

Im Folgenden verwendete Richtungsangaben beziehen sich dabei jeweils auf den eingebauten Zustand der Beleuchtungsvorrichtung in ein Kraftfahrzeug bzw. in einen Kraftfahrzeugscheinwerfer, welcher wiederum in ein Kraftfahrzeug eingebaut ist.

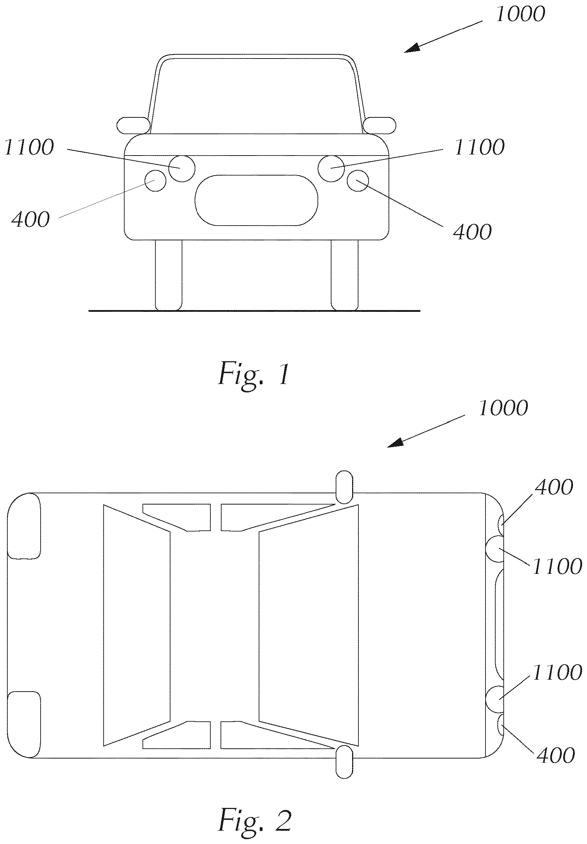

Figur 1 und Figur 2 zeigen grob schematisch ein Kraftfahrzeug 1000 in einer Vorderansicht bzw. in einer Ansicht von oben. Das hier gezeigte Kraftfahrzeug 1000 weist einen linken und einen rechten Hauptscheinwerfer 1100 und eine linke und eine rechte erfindungsgemäße Beleuchtungsvorrichtung 400 auf. In dieser stark vereinfachenden Darstellung dienen Hauptscheinwerfer 1100 zur Erzeugung von Hauptlichtverteilungen wie Abblendlicht und Fernlicht, sowie von Signalisierungsfunktion wie Blinklicht (Fahrtrichtungsanzeiger), während die erfindungsgemäße Beleuchtungsvorrichtung 400 ausschließlich zur Realisierung von einer oder mehreren Beleuchtungsfunktionen im Rahmen der Erfindung dient. Real kann eine erfindungsgemäße Beleuchtungsvorrichtung aber auch in einen Hauptscheinwerfer integriert sein, oder gemeinsam mit einer oder mehreren anderen Beleuchtungsvorrichtung, z.B. mit einem Fahrtrichtungsanzeiger, ein eigenes Modul bilden. In dieser Hinsicht unterliegt die Erfindung keinen Beschränkungen.

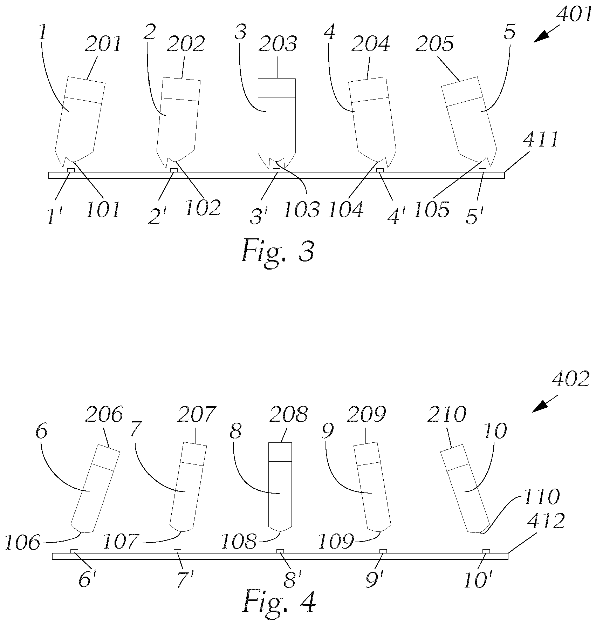

Die **Figuren 3-6** zeigen unterschiedliche Ausgestaltungen von Beleuchtungsvorrichtung 401, 402, 403, 404, bei welchen die verwendeten Projektionsoptiken aus lichtleitenden Optikkörpern, vorzugsweise sogenannten TIR-Optiken, in welchen sich das eingekoppelte Licht mittels Totalreflexion fortpflanzt, ausgebildet sind. **Figur 3** zeigt eine Beleuchtungsvorrichtung 401 mit fünf Projektionsoptiken 1 - 5, wobei jeder Projektionsoptik genau eine Lichtquelle 1' - 5' zugeordnet ist. Die Projektionsoptiken 1 - 5 sind als lichtleitende Körper, insbesondere TIR-Optiken ausgebildet. Die Lichtquellen 1'-5' können jeweils über einen Lichteinkoppelbereich 101 -105 Licht in die Projektionsoptiken einkoppeln, und dieses Licht kann über Lichtauskoppelbereiche 201 - 205 wieder austreten. Die Projektionsoptiken 1 - 5, insbesondere die Lichtauskoppelbereiche 201 - 205 (dies gilt allgemein, nicht beschränkt auf diese oder weiteren gezeigte Ausführungsformen), sind derart ausgebildet und angeordnet, dass das austretende Licht in Form eines Lichtsegmentes auf einen Boden, beispielsweise auf eine Fahrbahn, auf welcher sicher das Fahrzeug mit der Beleuchtungsvorrichtung 401 befindet, abgebildet wird.

Die Lichtquellen 1 - 5 können unabhängig voneinander angesteuert, d.h. ein- und ausgeschaltet werden, und vorzugsweise auch gedimmt werden. Dadurch können beliebige Kombination von Lichtsegmenten geschaltet werden.

Jede Lichtquellen 1 - 5 besteht aus zumindest einer lumineszenzemittierenden Diode LED, kann aber auch zwei oder mehr LED's umfassen. In letzterem Fall kann es von Vorteil sein, wenn die LED's einer Lichtquelle ebenfalls unabhängig voneinander geschaltet und vorzugsweise gedimmt werden können, es kann aber auch vorgesehen sein, dass alle LED's einer Lichtquellen nur gemeinsam geschaltet und vorzugsweise gedimmt werden können.

Bei dieser Ausgestaltung sitzen die Lichtquellen 1 - 5 auf einer gemeinsamen LED-Leiterplatte 411, und die Projektionsoptiken 1 - 5 sind zu den Lichtquellen 1' - 5' verdreht angeordnet. In dem gezeigten Beispiel sind die Lichtauskoppelflächen 201 - 205 zueinander verdreht ausgerichtet.

Weiters sind die Lichteinkoppelflächen 101,102,104,105 der äußeren Projektionsoptiken 1, 2, 4, 5 asymmetrisch ausgebildet und lediglich die Lichteinkoppelfläche 103 der mittleren Projektionsoptik 3 symmetrisch ausgebildet.

Mit einem TIR-Reflektor bzw. einer TIR-Optik ist der Aufbau in der Regel effizienter als ohne TIR-Optik. In der Regel sind auch breitere Optiken generell effizienter. Die beschriebene Ausgestaltung kann günstig sein, um eine Kollision mit dem LED-Print insbesondere bei einem Verdrehen des optischen Körpers in Bezug auf die LED vermeiden zu können.

**Figur 4** zeigt eine Beleuchtungsvorrichtung 402, die einen ähnlichen Aufbau wie jene aus **Figur 3** aufweist, die zu **Figur 3** getroffenen Aussagen treffen auch hier weitestgehend zu und es werden die konstruktiven Zusammenhänge nur noch grob erörtert, und lediglich die Unterschiede ausführlicher beschrieben.

Die Beleuchtungsvorrichtung 402 weist fünf Projektionsoptiken 6 - 10 in Form von lichtleitenden Optikkörpern, insbesondere TIR-Optiken, mit Lichteinkoppelbereichen 106-110 und Lichtauskoppelbereichen 206 - 210 auf. Jeder Projektionsoptik ist genau eine Lichtquelle 6' - 10' zugeordnet ist. Die Lichtquellen 6' - 10', die wiederum jeweils eine oder mehrere LED's aufweisen, sind auf einer gemeinsamen LED-Leiterplatte 412 angeordnet und die Projektionsoptiken 6 - 10 sind wie in **Figur 3** verdreht zu den Lichtquellen angeordnet.

Im Gegensatz zu der Ausführungsform aus **Figur 3** weisen die Projektionsoptiken 6 -10 bei der Beleuchtungsvorrichtung 402 aus **Figur 4** symmetrische Lichteinkoppelbereiche 106-110 auf, und die lichtleitenden Optikkörper sind schmäler ausgebildet als jene aus **Figur 3**. Entsprechend können scharfe Begrenzungskanten der einzelnen Lichtsegmente erzielt werden, sodass diese unmittelbarer aneinander anschließen können und weniger überlappen.

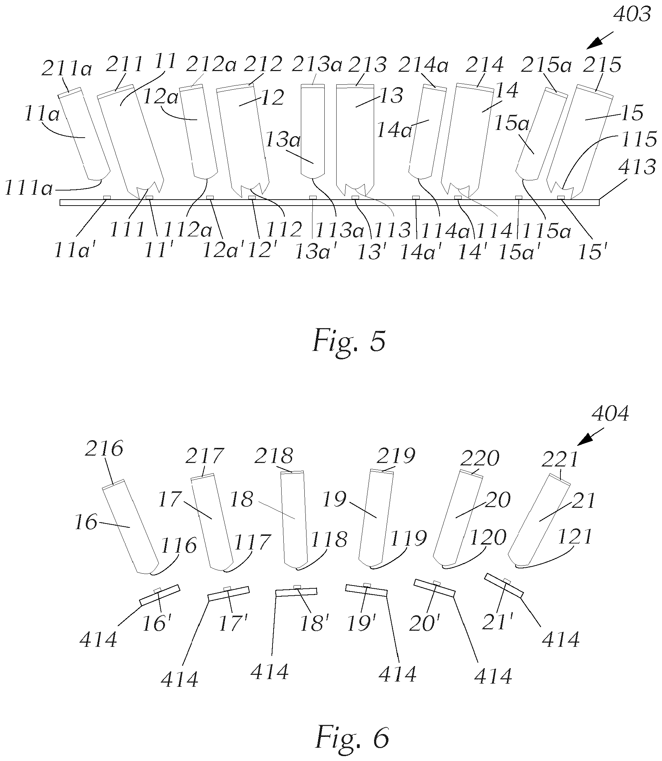

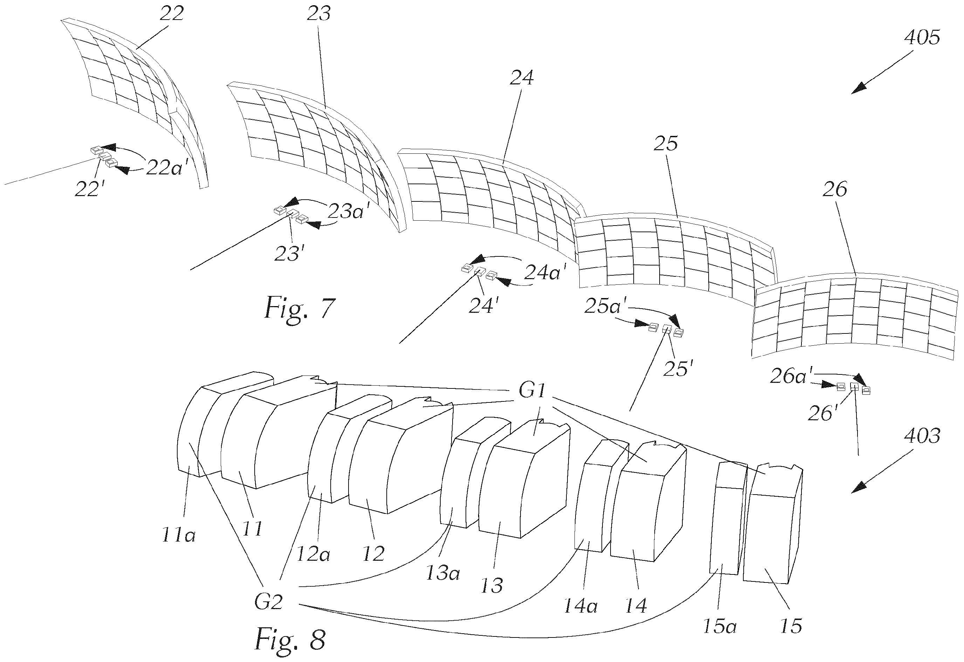

**Figur 5** (siehe dazu auch **Figur 8**) zeigt eine Ausführungsform mit zwei Gruppen G1, G2 von Projektionsoptiken 11 -15 (G1), 11a -15a (G2). Die Projektionsoptiken 11 -15, 11a -15a sind wiederum als lichtleitende Körper, insbesondere TIR-Optiken, mit Lichteinkoppelbereichen 111 -115, 111a - 115a und Lichtauskoppelbereichen 211 - 215, 211a - 215a ausgebildet, jeder Projektionsoptik ist genau eine Lichtquelle 11' - 15', 11a' - 15a' zugeordnet.

Für die Lichtquellen gelten bezüglich Ansteuerbarkeit und vorzugsweise Dimmbarkeit sowie konkreten Aufbau die vorstehend getroffenen Aussagen, diese gelten auch für alle weiteren Ausführungsbeispiele.

Alle Lichtquellen sitzen auf einer gemeinsamen LED-Leiterplatte 413. Es wäre aber auch denkbar, dass für jede Gruppe von Lichtquellen eine eigene LED-Leiterplatte vorgesehen ist oder dass jede Lichtquelle auf einer eigenen LED-Leiterplatte sitzt.

In diesem Beispiel sind alle Lichtauskoppelbereiche symmetrisch aufgebaut, und die Lichtauskoppelbereich sind voneinander weggedreht angeordnet. Es wäre aber auch denkbar, dass die Lichtauskoppelbereiche zueinander verdreht angeordnet sind, und es kann auch vorgesehen sein, dass einer, mehrere oder alle der Lichteinkoppelbereiche asymmetrisch ausgebildet sind.

Mit jeder Gruppe G1, G2 von Projektionsoptiken und Lichtquellen kann eine eigene Beleuchtungsfunktion realisiert werden. Beispielsweise kann mit einer Gruppe eine Projektion für Abbiegelicht realisiert werden, und mit der anderen Gruppe eine Blinklichtprojektion realisiert werden, d.h. entweder ein eigenständiges gesetzeskonformes Blinklicht oder zusätzlich zu dem bekannten Blinklicht eine Projektion von entsprechenden, das Blinken zusätzlich optisch hervorhebenden Lichtsegmenten auf die Fahrbahn. Konkret erzeugt Gruppe G1 dabei die Abbiegelicht-Bodenprojektionsfunktion oder Zusatz-Abbiegelicht-Bodenprojektionsfunktion, Gruppe G2 erzeugt die Blinker-Bodenprojektionsfunktion oder Zusatz-Blinker-Bodenprojektionsfunktion.

Allgemein, d.h. nicht auf die konkreten Ausführungsbeispiele beschränkt, weisen je nach gewünschter Beleuchtungsfunktion die Lichtquellen eine entsprechende Farbe auf, z.B. weiß oder orange bzw. gelb, wobei für eine Beleuchtungsfunktion im Sinne einer Lichtfunktion wie z.B. Abbiegelicht weiße Lichtquellen verwendet werden, während für eine Beleuchtungsfunktion im Sinne einer Signalisierungsfunktion, wie etwa einer Blinklichtprojektion; orange bzw. gelbe Lichtquellen verwendet werden.

Im Beispiel aus **Figur 5** bestehen die Lichtquellen 11' - 15' beispielsweise aus jeweils einer oder mehreren weißen LED's und die Lichtquellen 11a' - 15a' aus jeweils einer oder mehreren orangen bzw. gelben LED's und sind derart ausgebildet und angeordnet, dass das austretende Licht in Form eines Lichtsegmentes auf einen Boden, beispielsweise auf eine Fahrbahn, auf welcher sicher das Fahrzeug mit der Beleuchtungsvorrichtung 401 befindet, abgebildet wird.

Die Lichtquellen können unabhängig voneinander angesteuert, d.h. ein- und ausgeschaltet werden, und vorzugsweise auch gedimmt werden. Dadurch können beliebige Kombination von Lichtsegmenten geschaltet werden.

Jede Lichtquellen besteht aus zumindest einer LED, kann aber auch zwei oder mehr LED's umfassen. In letzterem Fall kann es von Vorteil sein, wenn die LED's einer Lichtquelle ebenfalls unabhängig voneinander geschaltet und vorzugsweise gedimmt werden können, es kann aber auch vorgesehen sein, dass alle LED's einer Lichtquellen nur gemeinsam geschaltet und vorzugsweise gedimmt werden können.

Auch bei der Ausgestaltung gemäß **Figur 5** sitzen alle Lichtquellen auf einer gemeinsamen LED-Leiterplatte 413, und die Projektionsoptiken sind zu den Lichtquellen verdreht angeordnet. In dem gezeigten Beispiel sind die Lichtauskoppelflächen 211 - 215, 211a - 215a zueinander verdreht ausgerichtet.

Weiters sind die Lichteinkoppelflächen beispielhaft symmetrisch ausgebildet.

**Figur 6** zeigt noch ein weiteres Beispiel einer Beleuchtungsvorrichtung 404 mit sechs Projektionsoptiken 16 - 21, mit Lichteinkoppelbereichen 116 -121 und Lichtauskoppelbereichen 216 - 221, sowie den Projektionsoptiken zugeordneten Lichtquellen 16' - 21'. Mit diesem Ausführungsbeispiel soll gezeigt werden, dass auch mehr oder weniger als fünf Projektionsoptiken verwendet werden können, außerdem sitzt hier jede Lichtquelle 16' - 21' auf einer eigenen LED-Leiterplatte 414, und im Falle von identischen Projektionsoptiken können die Projektionsoptiken jeweils zu ihrer Lichtquelle identische ausgerichtet werden, und die Baugruppen aus Leiterplatte, Lichtquelle und Projektionsoptik können zueinander verdreht werden, während beispielsweise bei der Beleuchtungsvorrichtung 402 aus **Figur 4**, wo die Projektionsoptiken ebenfalls identisch aufgebaut sind, jede Projektionsoptik zu der LED-Leiterplatte 412 verdreht angeordnet ist.

Anstelle von Projektionsoptiken in Form von lichtleitenden Körpern wie vorstehend beschrieben können als Projektionsoptiken auch Reflektoren vorgesehen sein, die entsprechend angepasst sind, um die gewünschten Lichtsegmente zu erzeugen.

Grundsätzlich ist es dabei wieder möglich, dass jedem Reflektor genau eine Lichtquelle zugeordnet ist, z.B. in Analogie zu den Figuren 3, 4, 6, oder es sind zwei oder mehreren Gruppen von Reflektoren mit jeweils einer Lichtquelle vorgesehen, analog zu **Figur 5**. Alle Lichtquellen können wiederum auf einer LED-Leiterplatte angeordnet sein, oder jede Lichtquelle sitzt auf einer LED-Leiterplatte. Auch dazu gelten die Aussagen bezüglich der Anordnung der Reflektoren in Bezug auf die Lichtquellen analog wie vorstehend ausgeführt.

**Figur 7** selbst zeigt ein Beispiel, bei dem jedem Reflektor 22 - 26 jeweils zwei Lichtquellen 22' - 26', 22a' - 26a' zugeordnet sind. Die ersten Lichtquellen 22' - 26' bestehen aus genau einer LED, welche vorzugsweise in einem Brennpunkt des jeweiligen Reflektors angeordnet sind. Die zweiten Lichtquellen 22a' - 26a' bestehen jeweils aus zwei LED's, welche vorzugsweise symmetrisch zu dem Brennpunkt, in welchem die ersten Lichtquelle sitzt, angeordnet ist. Mit einer solchen Anordnung können unter Verwendung von jeweils einer Gruppe von Projektionsoptiken, die beispielsweise auch identisch ausgebildet sein können, zwei unterschiedliche Beleuchtungsfunktionen realisiert werden, beispielsweise in dem Sinne, wie es bereits an Hand von **Figur 5** erörtert wurde.

In den folgenden Figuren werden Lichtverteilungen, d.h. Lichtsegmente in unterschiedlichen Darstellungen gezeigt, wie sie mit erfindungsgemäßen Beleuchtungsvorrichtungen erzeugt werden können. Wie oben schon beschrieben, kann jede Projektionsoptik einer Beleuchtungsvorrichtung ein Lichtbündel emittieren, und je nach Darstellung muss dabei unterschieden werden zwischen
- der Projektion des Lichtbündels auf eine Fahrbahn, auf der sich ein Fahrzeug (dabei wird davon ausgegangen, dass sich das Fahrzeug in Ruhe befindet) mit einer eingebauten Beleuchtungsvorrichtung befindet (auch als *"Bodenprojektion"* oder *"Fahrbahnprojektion"* bezeichnet), in welcher sich ein entsprechendes *Lichtsegment der Bodenprojektion* ergibt, und
- Lichtstärke-Verteilungen der jeweiligen Lichtbündel bzw. von Überlagerungen dieser Lichtbündel. Der Einfachheit halber wir die Darstellung der Lichtsegmente und ihrer Überlagerungen in der Lichtstärke-Verteilung als *"Schirmprojektion"* bezeichnet.

Da es sich dabei lediglich um unterschiedliche Darstellungen desselben Lichtbündels handelt, werden in beiden Darstellungen jeweils dieselben Bezugszeichen verwendet.

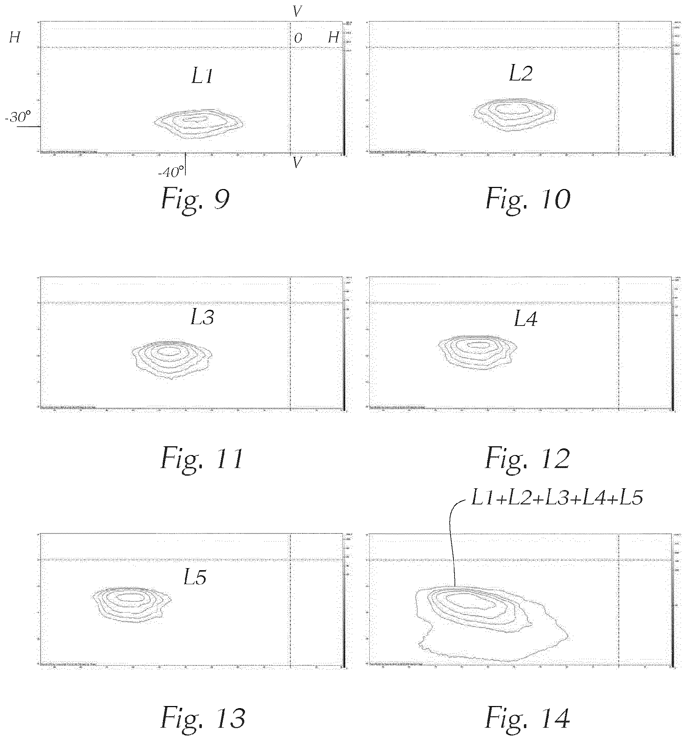

Die **Figuren 9-13** zeigen Lichtsegmente L1 - L5 in einer Schirmprojektion, wie sie beispielsweise mit einer Beleuchtungsvorrichtung aus den **Figuren 3, 4****,** **6** oder einer Beleuchtungsvorrichtung aus **Figur 5** bei Aktivierung lediglich einer Gruppe von Lichtquellen erzeugt werden können. **Figur 14** zeigt schließlich noch die fünf gezeigten Lichtsegmente L1 - L5 in einer Überlagerung, wobei hier die Lichtsegmente auch gedimmt sein können.

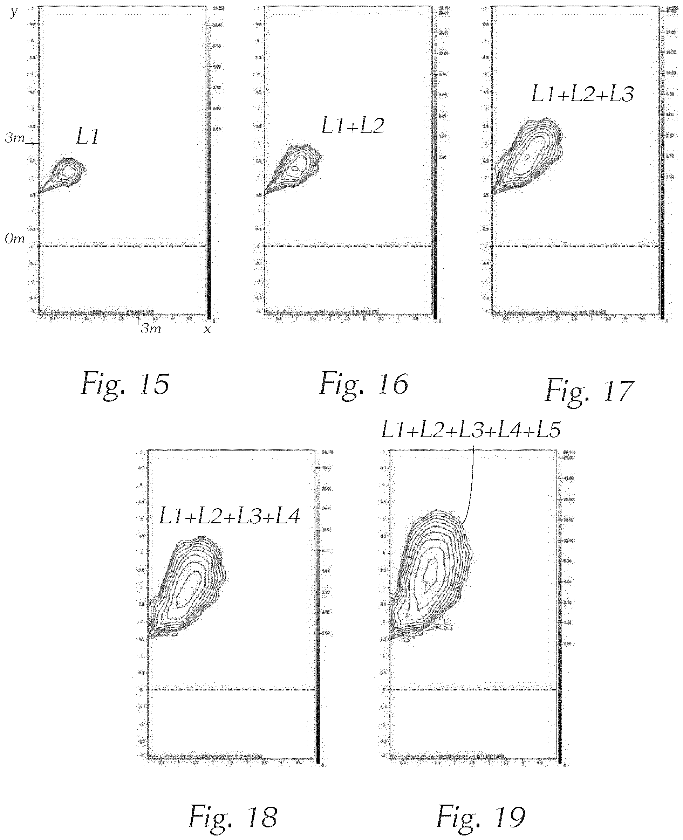

In dem gezeigten Beispiel werden dabei die Lichtsegmente gezeigt, wie sie von einer Beleuchtungsvorrichtung erzeugt werden können, welche auf der linken Fahrzeugseite eines Fahrzeuges für Rechtsverkehr angeordnet ist. Weiters wird angenommen, dass für die gezeigten Bodenprojektionen (**Figuren 15 bis 19**, **Figuren 30 bis 34**, **Figuren 35 bis 39**, **Figuren 40 bis 44** und **Figuren 45 bis 49**) die Orientierung des Fahrzeuges quer zum abbildenden Blatt und mit der Fahrzeugvorderseite auf der rechten Seite so wie in der Fahrzeugdraufsicht von **Figur 2** dargestellt angenommen ist. Die gezeigten Lichtverteilungen würden beispielsweise in dem Fall aktiviert werden, in dem sich dieses so orientierte Fahrzeug in Fahrtrichtung bewegt und ein Verlassen der befahrenen Fahrspur anzeigt, also z.B. signalisiert, dass es nach links abbiegt oder beispielsweise auf die links liegende Fahrspur der Fahrbahn wechselt.

Der Einfachheit halber wird im Folgen davon ausgegangen, dass die verwendete Beleuchtungsvorrichtung 400 jene aus **Figur 3** mit den Projektionsoptiken 1 - 5 ist und Lichtquellen 1' - 5' ist.

Generell gelten aber die im Rahmen der Figurenbeschreibung getroffenen Aussagen und Zusammenhänge, unabhängig von den konkreten Ausgestaltungen, in allgemeinem Zusammenhang und nicht beschränkt auf die beschriebene Ausführungsform.

Die Projektionsoptiken 1 - 5 sind derart angeordnet und ausgebildet, dass
- Projektionsoptik 1 das Lichtsegment L1 erzeugt, welches sich in der Schirmprojektion von ca. -50° bis -20° horizontal und von ca. -35° bis -22° vertikal erstreckt,
- Projektionsoptik 2 das Lichtsegment L2 erzeugt, welches sich in der Schirmprojektion von ca. -55° bis -25° horizontal und von ca. -3o° bis -20° vertikal erstreckt,
- Projektionsoptik 3 das Lichtsegment L3 erzeugt, welches sich in der Schirmprojektion von ca. -60° bis -30° horizontal und von ca. -3o° bis -15° vertikal erstreckt,
- Projektionsoptik 4 das Lichtsegment L4 erzeugt, welches sich in der Schirmprojektion von ca. -70° bis -40° horizontal und von ca. -25° bis -12° vertikal erstreckt, und
- Projektionsoptik 5 das Lichtsegment L5 erzeugt, welches sich in der Schirmprojektion von ca. -75° bis -45° horizontal und von ca. -22,5° bis -10° vertikal erstreckt.

Ändert sich die Anbauhöhe der Beleuchtungseinrichtung, so ändern sich auch die oben angeführten Winkelbereiche in vertikaler Richtung V.

Die Figuren **15 - 19** zeigen ein Anwendungsszenario unter Verwendung von Lichtsegmenten, wie sie in der Schirmprojektion in den **Figuren 9 - 13** gezeigt sind, an Hand einer entsprechenden Bodenprojektion.

**Figur 15** zeigt dabei das erste Lichtsegment L1 in der Bodenprojektion, die **Figuren 16 - 19** zeigen das sukzessive Hinzuschalten der weiteren Lichtsegmente durch Einschalten der jeweiligen Lichtquellen der Beleuchtungsvorrichtung. Die Lichtsegmente überlagern sich entsprechend und bilden Lichtverteilungen L1 + L2 (**Fig. 16**), L1 + L2 + L3 (**Fig. 17**), L1 + L2 + L3 + L4 (**Fig. 18**) und L1 + L2 + L3 + L4 + L5 (**Fig. 19**).

Die x-Achse ist dabei in Fahrtrichtung gerichtet, in den Darstellungen in den Figuren bewegt sich somit das Fahrzeug nach rechts, entlang der x-Achse. Die y-Achse, welche in der Darstellung auf dem Zeichenblatt normal auf die x-Achse steht und vertikal verläuft, verläuft real horizontal und normal zur x-Achse, gibt also den seitlichen Abstand zu der Beleuchtungsvorrichtung an. Die von den x-y-Koordinaten aufgespannte Ebene ist real somit eine Horizontalebene. Das (gedachte) Kraftfahrzeug steht in den Bodenprojektionsdarstellungen in Richtung der x-Achse und bewegt sich in der Blattdarstellung von links nach rechts, real in Richtung der x-Achse, die linke Beleuchtungsvorrichtung liegt im Ursprung des Koordinatensystem. Jede Bodenprojektion stellt eine Momentaufnahme dar.

Wie man in der Lichtstärke-Verteilung des zugehörigen Segmentes erkennen kann (**Figur 9**), erstreckt sich das Lichtsegmente L1 nach vorne und links. Wie man erkennt, erstreckt sich dabei das Lichtsegment L1 beginnend in einem Abstand von ca. 0 Meter (x-Achse) vor der Beleuchtungsvorrichtung und ca. 1,5 Meter (y-Achse) seitlich neben der Beleuchtungsvorrichtung schräg unter dem entsprechenden Winkel nach vorne.

Mit weiterem Hinzuschalten von Lichtsegmenten in der Reihenfolge L2, L3, L4, L5, wobei die zuvor eingeschalteten Lichtsegmente eingeschaltet bleiben, vergrößert sich die durch die Überlagerung der Lichtsegmente gebildete Lichtverteilung, wie dies in den **Figuren 16 - 19** gut zu erkennen ist. In der Überlagerung aller Lichtsegmente L1 - L5,wie in **Figur 19** gezeigt, erstreckt sich die resultierende Lichtverteilung ca. 5 Meter nach links und ausgehend von einem Abstand von 1,5 Metern bis zu einer Entfernung von 2,5 Metern nach vorne.

Die einzelnen Lichtquellen können dabei voll betrieben werden, es kann aber auch vorgesehen sein, dass diese, auch unterschiedliche voneinander, gedimmt betrieben werden.

Es können bei diesem Animationsszenario z.B. gelbe bzw. orange Lichtquellen verwendet werden, und mit der wachsenden, sich vor einem Fahrzeug nach vorne und seitlich rechts vergrößernden Lichtverteilung kann entsprechend, zusätzlich zu dem normalen, handelsüblichen und bekannten Blinklicht, eine Blinklicht-Bodenprojektionsfunktion realisiert werden.

Diese animierte Fahrtrichtungsanzeiger-Bodenprojektion dient als Zusatzfunktion zum üblichen Blinker, um auch Verkehrsteilnehmer, die nicht direkt auf den Blinker sehen (können) oder nicht direkt auf das Fahrzeug achten, auf eine Änderung der Fahrtrichtung aufmerksam zu machen (z.B. beim Abbiegen oder beim Spurwechsel). Dadurch entsteht ein zusätzlicher Sicherheitsgewinn.

Die Einzelsegmente werden also in der Schirmprojektion in den **Figuren 9 - 13** dargestellt. **Figur 14** zeigt dann die finale Überlagerung mit Dimmung der Einzelsegmente. Die **Figuren 15 - 19** zeigen dann das Animationsszenario wie oben beschrieben, bei dem die Segmente einzeln mit richtiger Dimmung geschaltet werden. Bei diesem Szenario wird somit die Position der einzelnen Lichtsegmente L1 - L5 variiert, und es kann auch vorgesehen sein, dass die Lichtquellen gedimmt betrieben werden, also die von abgegebene Lichtmenge variiert wird.

Sobald alle Lichtsegmente für eine gewisse Zeitdauer aktiv waren, werden alle gemeinsam abgeschaltet, und wenn die entsprechende Lichtfunktion nach wie vor aktiviert ist, beginnt das Szenario wie oben beschrieben erneut abzulaufen.

Dabei kann vorgesehen sein, dass insbesondere bei einer gemeinsamen Aktivierung der Beleuchtungsvorrichtung mit dem "Haupt-Blinker" (z.B. als "Wischblinker") die gesamte Animation nach 200ms abgeschlossen ist und dann gegebenenfalls wieder von vorne beginnt.

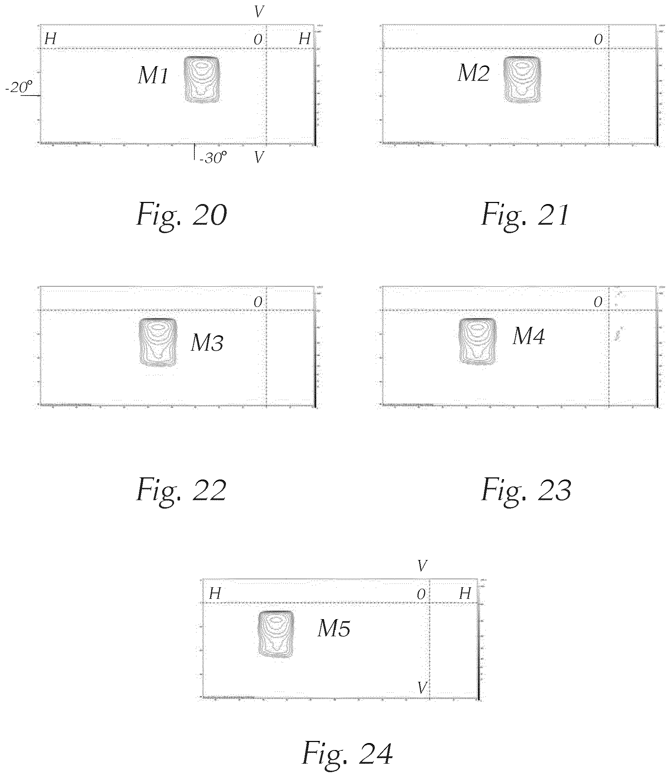

Die **Figuren 20 - 24** zeigen ein weiteres mögliches Szenario, wie es mit vorstehend beschriebenen Beleuchtungsvorrichtungen wie schon im Zusammenhang mit den **Figuren 9-19** beschrieben realisiert werden kann.

Die Projektionsoptiken der verwendeten Beleuchtungsvorrichtung sind derart angeordnet und ausgebildet, dass beispielsweise
- Projektionsoptik 1 das Lichtsegment M1 erzeugt, welches sich in der Schirmprojektion von ca. -35° bis -20° horizontal und von ca. -2,5° bis -22,5° vertikal erstreckt,
- Projektionsoptik 2 das Lichtsegment M2 erzeugt, welches sich in der Schirmprojektion von ca. -45° bis -30° horizontal und von ca. -2,5° bis -22,5° vertikal erstreckt,
- Projektionsoptik 3 das Lichtsegment M3 erzeugt, welches sich in der Schirmprojektion von ca. -55° bis -40° horizontal und von ca. -2,5° bis -22,5° vertikal erstreckt,
- Projektionsoptik 4 das Lichtsegment M4 erzeugt, welches sich in der Schirmprojektion von ca. -65° bis -50° horizontal und von ca. -2,5° bis -22,5° vertikal erstreckt, und
- Projektionsoptik 5 das Lichtsegment M5 erzeugt, welches sich in der Schirmprojektion von ca. -75° bis -60° horizontal und von ca. -2,5° bis -22,5° vertikal erstreckt.

Wiederum sei darauf hingewiesen, dass über eine veränderte Anbauhöhe die vertikalen Winkelerstreckung verändert werden können und die obigen Angaben, wie auch in den anderen Beispielen, entsprechend beispielhaft zu sehen sind.

Wie zu erkennen ist, verändern in vertikaler Richtung die Lichtsegmente ihre Lage und Ausdehnung nicht und bewegen sich ausschließlich in horizontaler Richtung.

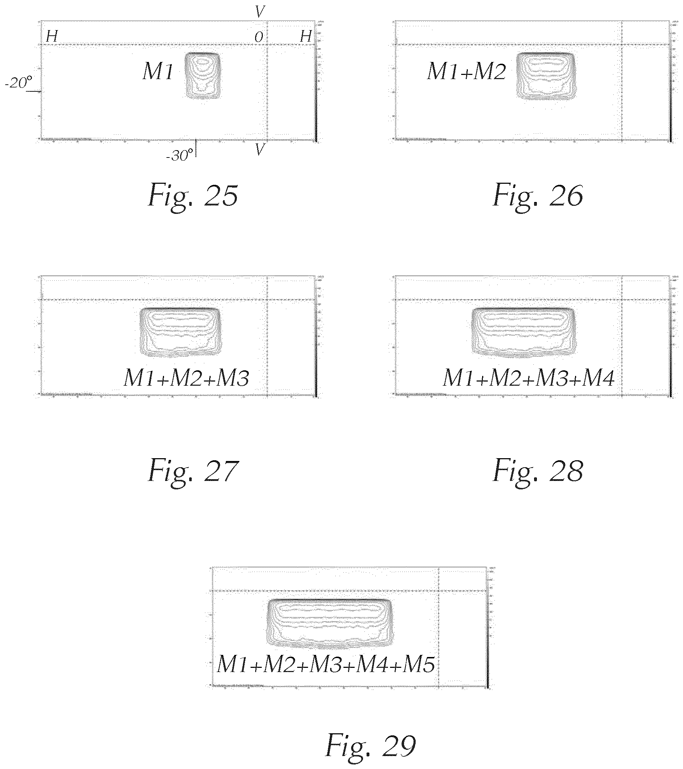

Die **Figuren 25 - 29** zeigen weiters noch die Überlagerung der einzelnen Lichtsegmente aus den **Figuren 20 - 24** in einer Überlagerung, wobei beginnend in **Figur 25**, wo nur das Lichtsegmente M1 aktiviert ist, sukzessive die weiteren Lichtsegmente M2, M3, M4 und M5 zu dem oder den aktiven Lichtsegment bzw. Lichtsegmenten dazu geschaltet werden, bis in Figur 29 alle fünf Lichtsegmente M1 bis M5 aktiviert sind. Wiederum können die entsprechenden Lichtquellen auch gedimmt betrieben sein.

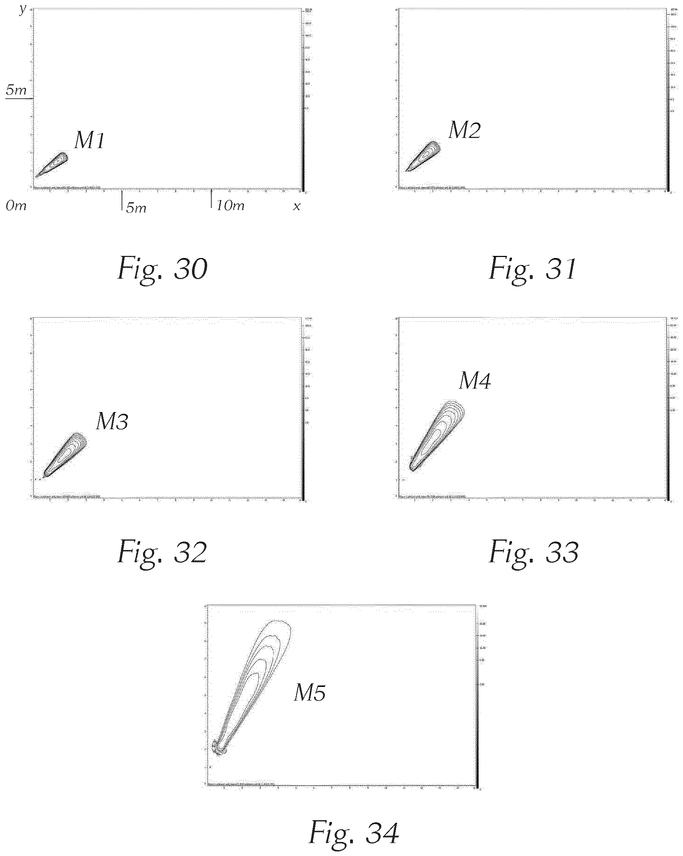

Die **Figuren 30 - 34** zeigen eine Animation zur Erzeugung einer Beleuchtungsfunktion in der Fahrbahnprojektion.

Dabei zeigt **Figur 30** das Lichtsegment M1 in der Bodenprojektion. Das Lichtsegment M1 erstreckt sich dabei keulenförmig unter einem Winkel von **ca. 25°** (zu der x-Achse) beginnend unmittelbar vor der Beleuchtungsvorrichtung (beginnend ca. 0 Meter vor und 0,5 Meter links der Beleuchtungsvorrichtung) bis ca. 2 Meter nach links und bis ca. 2 Meter nach vorne.

Bei diesem Animationsszenario gemäß den **Figuren 30 - 34** beginnt der "Zeiger", also der (von einzelnen Lichtsegmenten oder Überlagerungen von Lichtsegmenten) beleuchtet Bereich vor dem Kraftfahrzeug und wird zunehmend größer. Gleichzeitig "wischt" der Zeiger nach außen.

In diesem Beispiel handelt sich bei den einzelnen Lichtverteilungen in den **Figuren 30 - 34** jeweils um ein eigenes Lichtsegment (und nicht um eine Überlagerung von Lichtsegmenten), die entsprechende Lichtstärke-Verteilung dazu kann wie in den **Figuren 20 - 24** aussehen.

Bei dieser Animation ("wachsender Zeiger") ändert sich nicht nur der Winkelbereich in horizontaler Richtung, sondern es wird gezielt auch die Reichweite vergrößert.

Das kann beispielsweise durch ein Verschieben des Maximums in der Lichtstärkeverteilung näher zur H-H-Linie oder z.B. durch unterschiedliche Anbauhöhen der Projektionsoptiken der Beleuchtungsvorrichtung bewerkstelligt werden.

Bei der oben beschriebenen Beleuchtungsfunktion handelt es sich wieder um ein Animationsszenario für eine zusätzliche Blinker-Bodenprojektion zusätzlich zu einem Hauptblinker.

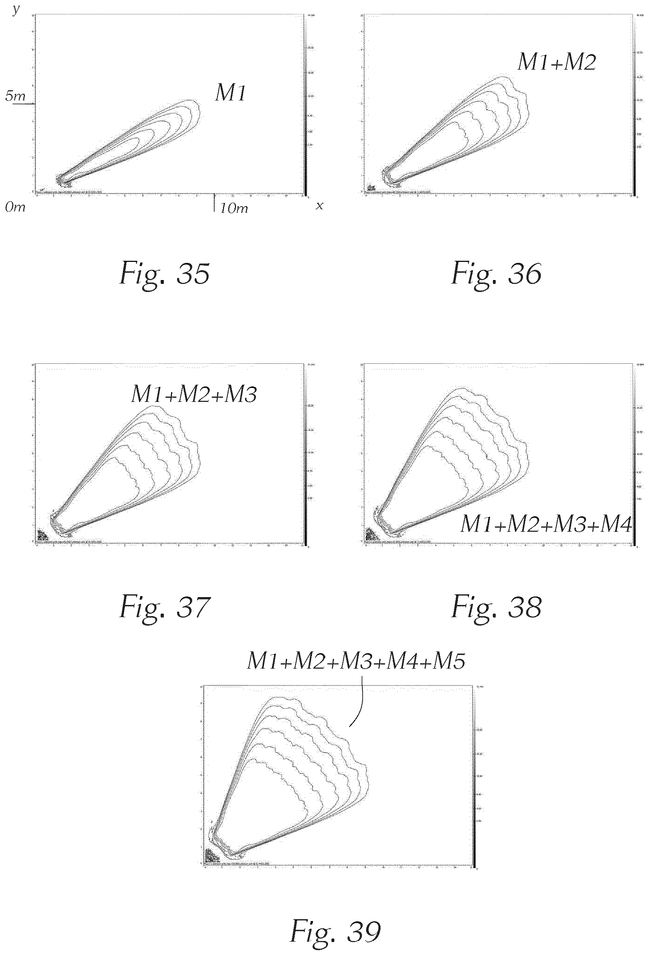

Die **Figuren 35 - 39** zeigen eine Beleuchtungsfunktion ("aufgehender Fächer") basierend auf einer Überlagerung von "Cursorelementen" wie in den **Figuren 25 - 29** dargestellt in einer Bodenprojektion

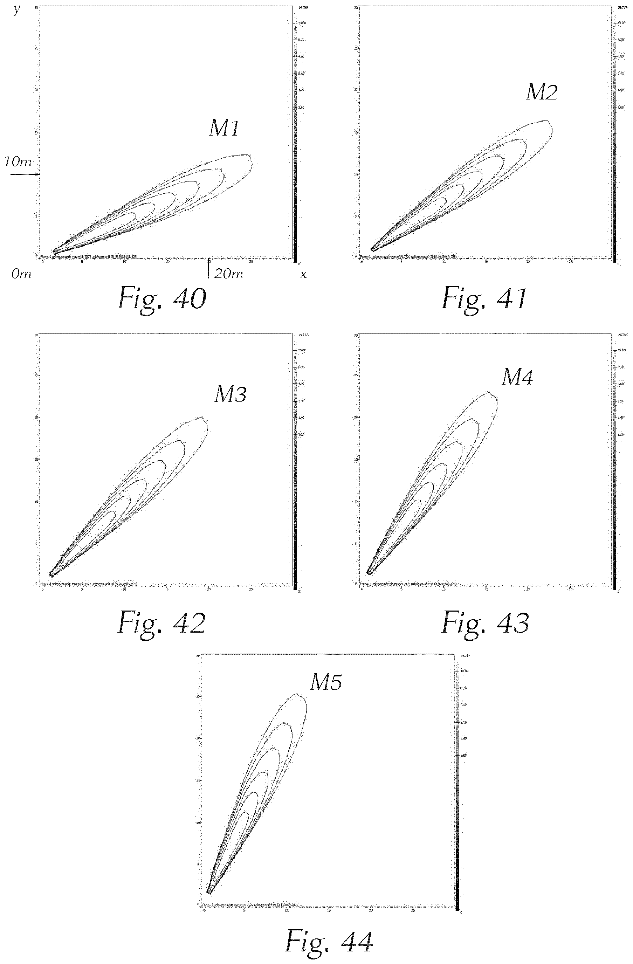

Die **Figuren 40 - 44** zeigen noch ein Animationsszenario "wischender Zeiger", umgesetzt durch nacheinander Schalten einzelner Lichtsegmente, die Lichtstärkeverteilung entspricht wieder jener aus den **Figuren 20 - 24**.

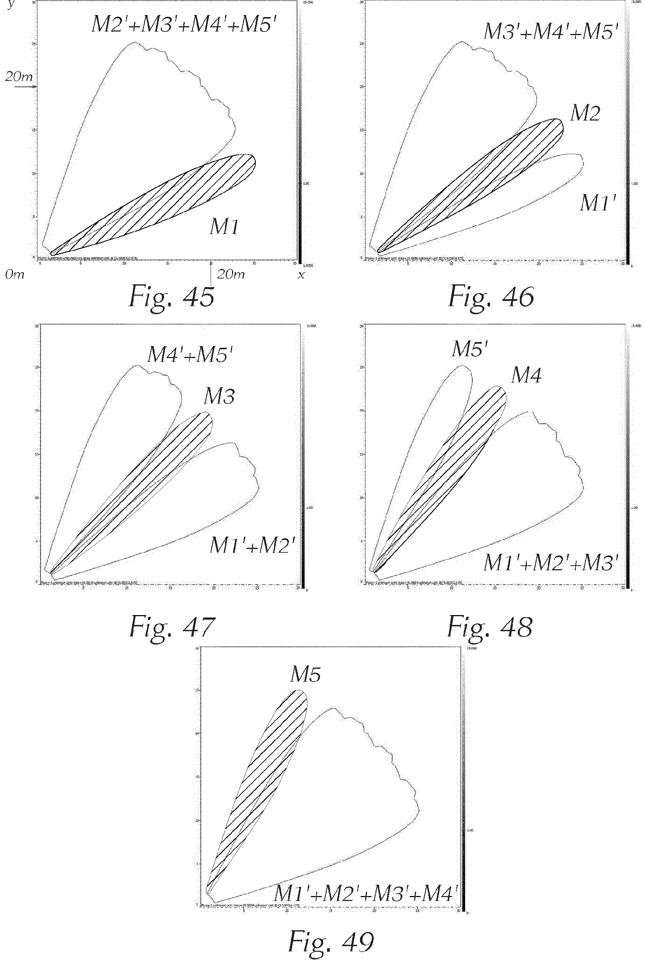

Die Figuren **45 - 49** schließlich zeigen noch ein Beispiel eines durch das Abbiegelicht wischenden Zeigers: eine Kombination aus gelbem "wischendem Zeiger" und segmentiertem Abbiegelicht (weiß). Jenes Segment des Abbiegelichtes, welches sich mit dem gelben/ orangen Zeiger des Blinklichtes würde überlagern, wird weggeschaltet.

Die Lichtstärke-Verteilungen M1, M2, M3, M4, M5 für den (einen) wischenden Zeiger (in gelb oder orange, als strichlierte Fläche dargestellt) entsprechen in diesem Beispiel jenen aus den **Figuren 20 - 24**, die Überlagerungen M2'+M3'+M4'+M5'; M1, M3'+M4'+M5'; M1'+M2', M4'+M5'; M1'+M2'+M3', M5';M1'+M2'+M3'+M4'der (in diesem Beispiel jeweils vier) anderen Lichtsegmente ergibt sich ebenfalls aus Lichtsegmenten, welche in der Schirmprojektion jenen aus den **Figuren 20 - 24** entsprechen, wobei hier weiße Lichtquellen verwendet werden.

Es kann zur Realisierung einer solchen Beleuchtungsfunktion z.B. eine Beleuchtungsvorrichtung mit fünf Projektionsoptiken verwendet werden, wobei jeder Projektionsoptik eine weiße und eine gelbe bzw. orange Lichtquelle zugeordnet ist, welche entsprechend geschaltet werden.

## Patentansprüche

1. Beleuchtungsvorrichtung (401, 402, 403, 404, 405), für ein Kraftfahrzeug (1000) zur Erzeugung von zumindest einer Beleuchtungsfunktion, wobei eine Beleuchtungsfunktion eine Blinklicht-Bodenprojektionsfunktion ist, z.B. eine Zusatz-Blinklicht-Bodenprojektionsfunktion, wobei vorzugsweise die Lichtquellen zur Erzeugung der Blinklicht-Bodenprojektionsfunktion farbiges Licht, z.B. oranges oder gelbes Licht emittieren können, wobei die Beleuchtungsvorrichtung (401, 402, 403, 404, 405) umfasst:
- zwei oder mehrere Projektionsoptiken (1 - 5; 6 - 10; 11 - 15, 11a - 15a; 16 - 21; 22-26);
- Lichtquellen (1' - 5'; 6' - 10'; 11' - 15', 11a' - 15a'; 16' - 21'; 22' - 26';22a' - 26a'), wobei jeder Projektionsoptik (1 - 5; 6 - 10; 11 - 15, 11a - 15a; 16 - 21; 22 - 26) zumindest eine Lichtquelle (1' - 5'; 6' - 10'; 11' - 15', 11a' - 15a'; 16' - 21'; 22' - 26'; 22a' - 26a') zugeordnet ist, wobei jede Lichtquelle eine oder mehrere Leuchtdioden umfasst, und wobei jede einer Projektionsoptik zugeordnete Lichtquelle zu einer definierten Beleuchtungsfunktion beiträgt;
wobei die Projektionsoptiken (1 - 5; 6 - 10; 11 - 15, 11a - 15a; 16 - 21; 22 - 26) dazu eingerichtet sind, Licht der ihr jeweils zugeordneten Lichtquelle oder Lichtquellen (1' - 5'; 6' - 10'; 11' - 15', 11a' - 15a'; 16' - 21'; 22' - 26'; 22a' - 26a') in Form von Lichtsegmenten (L1-L5; M1- M5) in einer Bodenprojektion, d.h. z.B. auf eine Fahrbahn, zu projizieren, und wobei die zu jeweils einer definierten Beleuchtungsfunktion beitragenden Lichtsegmente (L1- L5; M1- M5) von den entsprechenden Projektionsoptiken (1 - 5; 6 - 10; 11 - 15, 11a - 15a; 16-21; 22 - 26) in der Bodenprojektion derart projiziert werden, dass von benachbarten Projektionsoptiken erzeugbare Lichtsegmente (L1- L5; M1- M5) in dieser Bodenprojektion unmittelbar nebeneinander liegen, und wobei jede Lichtquelle (1' - 5'; 6' - 10'; 11' - 15', 11a' - 15a'; 16' - 21'; 22' - 26'; 22a' - 26a') unabhängig von den anderen Lichtquellen ansteuerbar ist, wobei bei Aktivieren einer Kombinationsbeleuchtungsfunktion, welche zwei unterschiedliche Beleuchtungsfunktionen umfasst, wobei jede Beleuchtungsfunktion jeweils p Lichtsegmente, mit p ≥ 2, umfasst, und wobei, für q gleich 1 bis p, das q-te Lichtsegment der ersten Beleuchtungsfunktion in einer Bodenprojektion im Wesentlichen denselben Bereich beleuchtet wie das q-te Lichtsegmente der zweiten Beleuchtungsfunktion, und wobei die Lichtsegmente der ersten Beleuchtungsfunktion mit einer ersten Farbe, und die Lichtsegmente der zweiten Beleuchtungsfunktion mit einer zweiten Farbe, erzeugt werden, wobei sich die erste von der zweiten Farbe unterscheidet, p - 1 Lichtsegmente der ersten Beleuchtungsfunktion aktiviert werden (M2', M3', M4', M5'), und das fehlende Lichtsegment von der zweiten Beleuchtungsfunktion erzeugt wird (M1), und wobei nach einer definierbaren oder definierten Zeit eines der p - 1 aktivierten Lichtsegmente der ersten Beleuchtungsfunktion sowie das Lichtsegment der zweiten Beleuchtungsfunktion deaktiviert werden (M2', M1), das bisher inaktive Lichtsegment der ersten Beleuchtungsfunktion aktiviert wird (M1'), und jenes Lichtsegment der zweiten Beleuchtungsfunktion aktiviert wird (M2), welches dem aktuell deaktivierten Lichtsegment der ersten Beleuchtungsfunktion (M2') entspricht, wobei vorzugsweise bei Aktivieren der Kombinationsbeleuchtungsfunktion vorerst das erste Lichtsegment der zweiten Beleuchtungsfunktion und entsprechend die p -1 anderen Lichtsegmente der ersten Beleuchtungsfunktion erzeugt werden (M1, M2', M3', M4', M5'), und anschließend der Reihe nach das zweite (M2), dritte (M3), ...-p-te Lichtsegment der zweiten Beleuchtungsfunktion und entsprechend die p - 1 Lichtsegmente der ersten Beleuchtungsfunktion aktiviert werden.

2. Beleuchtungsvorrichtung nach Anspruch 1, **dadurch gekennzeichnet, dass** jede Leuchtdiode einer Lichtquelle (1' - 5'; 6' - 10'; 11' - 15', 11a' - 15a'; 16' - 21'; 22' - 26'; 22a'-26a') unabhängig von den anderen Leuchtdioden der Lichtquelle angesteuert werden kann.

3. Beleuchtungsvorrichtung nach Anspruch 1 oder 2, **dadurch gekennzeichnet, dass** jeder Projektionsoptik (1 - 5; 6 - 10; 16 - 21) genau eine Lichtquelle (1' - 5'; 6' - 10'; 16' - 21') zugeordnet ist, und dass alle Projektionsoptiken (1- 5; 6 - 10; 16 - 21) Lichtsegmente einer einzigen Beleuchtungsfunktion erzeugen.

4. Beleuchtungsvorrichtung nach einem der Ansprüche 1 bis 3, **dadurch gekennzeichnet, dass** jeder Projektionsoptik (11- 15; 11a - 15a) genau eine Lichtquelle (11'-15'; 11a' - 15a') zugeordnet ist, und zwei oder mehr Gruppen (G1, G2) von Projektionsoptiken (11 - 15; 11a - 15a) vorgesehen sind, wobei jede Gruppe (G1, G2) zur Erzeugung einer definierten Beleuchtungsfunktion vorgesehen ist, wobei vorzugsweise die Projektionsoptiken (11 - 15; 11a - 15a) der einzelnen Gruppen (G1, G2) alternierend angeordnet sind, und wobei vorzugsweise die Projektionsoptiken (11- 15; 11a - 15a) jeweils blockweise angeordnet sind, wobei jeder Block jeweils eine Projektionsoptik (11, 11a; 12, 12a; 13, 13a; 14, 14a; 15, 15a) einer jeden Gruppe (G1, G2) enthält, und wobei vorzugsweise innerhalb der Blöcke von Projektionsoptiken (11, 11a; 12, 12a; 13, 13a; 14,14a; 15, 15a) die Projektionsoptiken jeweils eine identische Reihenfolge in Hinblick auf ihre Gruppe aufweisen.

5. Beleuchtungsvorrichtung nach einem der Ansprüche 1 bis 4, **dadurch gekennzeichnet, dass** Projektionsoptiken, insbesondere alle Projektionsoptiken (22 - 26), einen Reflektor umfassen oder aus einem Reflektor gebildet sind, wobei vorzugsweise
- im Falle von einer Lichtquelle für jeden Reflektor diese Lichtquelle in einem Brennpunkt des Reflektors sitzt, oder
- im Falle von zwei oder mehreren Lichtquellen (22', 22a',23', 23a', 24', 24a', 25', 25a', 26', 26a') für jeden Reflektor (22 - 26)
∘ eine Lichtquelle (22', 23', 24', 25', 26') in einem Brennpunkt des Reflektors (22 - 25) angeordnet ist und die zumindest eine weitere Lichtquelle (22a', 23a', 24a', 25a', 26a') außerhalb dieses Brennpunktes angeordnet ist, oder
∘ die zwei oder mehreren Lichtquellen symmetrisch, insbesondere symmetrisch in Bezug auf ihre Lichtemissionsflächen, um einen Brennpunkt des Reflektors angeordnet sind.

6. Beleuchtungsvorrichtung nach einem der Ansprüche 1 bis 5, **dadurch gekennzeichnet, dass** Projektionsoptiken, insbesondere alle Projektionsoptiken (1 - 5; 6 -10; 11 -15; 11a - 15a; 16 - 21), jeweils aus einem lichtleitenden Optikkörpern, z.B. aus TIR-Optiken, welche lichtleitenden Optikkörper zumindest einen Lichteinkoppelbereich (101-105; 106 - 110; 111 - 115; 111a - 115a; 116 - 121) zum Einkoppeln von Licht von zumindest einer Lichtquelle (1' - 5'; 6' - 10'; 11' - 15'; 11a' - 15a'; 16' - 21') und zumindest eine Lichtaustrittsfläche (201 - 205; 206 - 210; 211 - 215; 211a - 215a; 216 - 221) zum Auskoppeln des eingekoppelten Lichtes in Form eines Lichtsegmentes (L1- L5; M1- M5) umfassen, gebildet sind oder eine solchen lichtleitenden Optikkörper umfassen.

7. Beleuchtungsvorrichtung nach einem der Ansprüche 1 bis 6, **dadurch gekennzeichnet, dass** alle Projektionsoptiken oder alle Projektionsoptiken, welche zu einer definierten Beleuchtungsfunktion beitragen, identisch aufgebaut sind.

8. Beleuchtungsvorrichtung nach einem der Ansprüche 1 bis 7, **dadurch gekennzeichnet, dass**
- alle Lichtquellen (1' - 5'; 6' - 10'; 11' -15', 11a' - 15a') auf einer gemeinsamen Leiterplatte (411; 412; 413) angeordnet sind, oder
- alle Lichtquellen, welche zu einer definierten Beleuchtungsfunktion beitragen, jeweils auf einer gemeinsamen Leiterplatte angeordnet sind, oder
- alle Lichtquellen (16' - 21') einer Projektionsoptik (414) jeweils auf einer gemeinsamen Leiterplatte angeordnet sind.

9. Beleuchtungsvorrichtung nach einem der Ansprüche 1 bis 8, **dadurch gekennzeichnet, dass** eine Beleuchtungsfunktion eine Lichtfunktion, vorzugsweise eine Abbiegelicht-Bodenprojektionsfunktion, z.B. eine Zusatz-Abbiegelicht-Bodenprojektionsfunktion, oder beispielsweise eine Heckleuchten-Bodenprojektionsfunktion, z.B. eine Zusatz-Heckleuchten-Bodenprojektionsfunktion, wie z.B. eine Rückfahrlicht-Bodenprojektionsfunktion bzw. Zusatz-Rückfahrlicht-Bodenprojektionsfunktion oder eine Bremslicht-Bodenprojektionsfunktion, z.B. eine Zusatz-Bremslicht-Bodenprojektionsfunktion, ist, wobei vorzugsweise die Lichtquellen zur Erzeugung einer Beleuchtungsfunktion weißes Licht oder farbiges, z.B. rotes Licht emittieren können.

10. Beleuchtungsvorrichtung nach einem der Ansprüche 1 bis 9, **dadurch gekennzeichnet, dass** die Lichtsegmente (L1- L5; M1- M5) in einer Fahrbahnprojektion keulenförmig ausgebildet sind, wobei sich die Lichtsegmente von der Beleuchtungsvorrichtung weglaufend verbreitern, wobei sich die Lichtsegmente vorzugsweise
- vor der Beleuchtungsvorrichtung bis maximal 10 Meter oder bis maximal 15 Meter oder bis maximal 20 Meter oder bis maximal 25 Meter und/oder
- seitlich, links oder rechts von der Beleuchtungsvorrichtung, bis maximal 10 Meter oder bis maximal 15 Meter oder bis maximal 20 Meter oder bis maximal 25 Meter erstrecken, wobei vorzugsweise
die Lichtsegmente in einem Abstand von 0 Meter oder von 0,5 Meter oder in einem Abstand von 1 Meter vor der Beleuchtungsvorrichtung beginnen und/oder in der Fahrbahnprojektion in einem Winkelbereich von ca. 20° oder -20° zur Fahrzeuglängsachse beginnen und vorzugsweise in einem Winkelbereich von 20° bis einschließlich 90° oder -20° bis einschließlich -90° zur Fahrzeuglängsachse liegen.

11. Beleuchtungsvorrichtung nach einem der Ansprüche 1 bis 10, **dadurch gekennzeichnet, dass** alle Lichtsegmente einer Beleuchtungsfunktion in einer Schirmprojektion in horizontaler Richtung und/oder in vertikaler Richtung in etwa dieselbe Ausdehnung, vorzugsweise identische Ausdehnung, aufweisen und/oder in vertikaler Richtung im Wesentlichen auf derselben Höhe liegen.

12. Beleuchtungsvorrichtung nach einem der Ansprüche 1 bis 11, **dadurch gekennzeichnet, dass** unterschiedliche Lichtsegmente einer Beleuchtungsfunktion in einer Schirmprojektion unterschiedliche Positionen in horizontaler Richtung aufweisen, wobei vorzugsweise in einer gemeinsamen Schirmprojektion zueinander benachbarte Lichtsegmente sich teilweise, insbesondere in horizontaler Richtung, überlappen.

13. Beleuchtungsvorrichtung nach einem der Ansprüche 1 bis 12, **dadurch gekennzeichnet, dass** nach einem Durchlauf der Aktivierung der Lichtsegmente alle Lichtsegmente deaktiviert werden und gegebenenfalls ein oder mehrere weitere Durchläufe erfolgen.

14. Beleuchtungsvorrichtung nach einem der Ansprüche 12 bis 13, **dadurch gekennzeichnet, dass** ein Durchlauf der Aktivierung der Lichtsegmente ca. 200 ms beträgt, wobei vorzugsweise zwischen zwei Durchläufen der Aktivierung der Lichtsegmente eine Zeitdauer von ca. 200 ms liegt.

15. Kraftfahrzeugscheinwerfer mit einer oder mehreren Beleuchtungsvorrichtungen nach einem der Ansprüche 1 bis 14.

16. Kraftfahrzeugheckleuchte mit einer oder mehreren Beleuchtungsvorrichtungen nach einem der Ansprüche 1 bis 14.

17. Kraftfahrzeug mit zumindest einer Beleuchtungsvorrichtung nach einem der Ansprüche 1 bis 14 und/oder mit zumindest einem Kraftfahrzeugscheinwerfer nach Anspruch 15 und/oder mit zumindest einer Kraftfahrzeugheckleuchte nach Anspruch 16.

## Claims

1. Lighting device (401, 402, 403, 404, 405), for a motor vehicle (1000) for generating at least one lighting function, wherein a lighting function is a flashing light ground projection function, e.g. an auxiliary flashing light ground projection function, preferably the light sources for generating the flashing light ground projection function being capable of emitting colored light, e.g. orange or yellow light, wherein the lighting device (401, 402, 403, 404, 405) comprises:
- two or more projection optics (1 - 5; 6 - 10; 11 - 15, 11a - 15a; 16 - 21; 22 - 26);
- light sources (1' - 5'; 6' - 10'; 11' - 15', 11a' - 15a'; 16' - 21'; 22' - 26';22a' - 26a'), wherein each projection optics (1 - 5; 6 -10; 11 -15, 11a - 15a; 16 - 21; 22 - 26) comprises at least one light source (1' - 5'; 6' - 10'; 11' - 15', 11a' - 15a'; 16' - 21'; 22' - 26'; 22a' - 26a') is associated, wherein each light source comprises one or more light emitting diodes, and wherein each light source associated with a projection optics contributes to a defined illumination function;
wherein the projection optics (1 - 5; 6 - 10; 11 - 15, 11a - 15a; 16 - 21; 22 - 26) are arranged to project light from the light source or light sources (1' - 5'; 6' - 10'; 11' - 15', 11a' - 15a'; 16' - 21'; 22' - 26'; 22a' - 26a') associated with it in each case in the form of light segments (L1- L5; M1 - M5) in a ground projection, i.e., onto a surface of the ground. i.e. e.g. onto a roadway, and wherein
the light segments (L1 - L5; M1 - M5) contributing to a defined illumination function in each case are projected by the corresponding projection optics (1 - 5; 6 - 10; 11 - 15, 11a - 15a; 16 - 21; 22-26) in the ground projection in such a way that light segments (L1 - L5; M1 - M5) which can be generated by adjacent projection optics lie directly next to one another in this ground projection, and wherein
each light source (1' - 5'; 6' - 10'; 11' - 15', 11a' - 15a'; 16' - 21'; 22' - 26'; 22a' - 26a') is controllable independently of the other light sources, wherein
upon activation of a combination illumination function comprising two different illumination functions, each illumination function comprising p light segments, respectively, with p ≥ 2, and wherein, for q equal to 1 to p, the q-th light segment of the first illumination function illuminates substantially the same area as the q-th light segment of the second illumination function in a ground projection, and wherein the light segments of the first illumination function are generated with a first color, and the light segments of the second illumination function are generated with a second color, wherein the first color differs from the second color, p - 1 light segments of the first illumination function are activated (M2', M3', M4', M5'), and the missing light segment is generated by the second illumination function (M1), and wherein, after a definable or defined time, one of the p - 1 activated light segments of the first illumination function and the light segment of the second illumination function are deactivated (M2', M1), the previously inactive light segment of the first illumination function is activated (M1), and that light segment of the second illumination function is activated (M2), which corresponds to the currently deactivated light segment of the first illumination function (M2'), with the first light segment of the second illumination function and correspondingly the p - 1 other light segments of the first illumination function being generated first (M1, M2', M3', M4', M5') when the combination illumination function is activated, and subsequently, in sequence, the second (M2), third (M3), ... -p-th light segment of the second lighting function and correspondingly the p - 1 light segments of the first lighting function are activated.

2. Lighting device according to claim 1, **characterized in that** each light emitting diode of a light source (1' - 5'; 6' - 10'; 11' - 15', 11a' - 15a'; 16' - 21'; 22' - 26'; 22a' - 26a') can be controlled independently of the other light emitting diodes of the light source.

3. Lighting device according to claim 1 or 2, **characterized in that** each projection optics (1 - 5; 6 - 10; 16 - 21) is assigned exactly one light source (1' - 5'; 6' - 10'; 16' - 21'), and that all projection optics (1 - 5; 6 - 10; 16 - 21) generate light segments of a single lighting function.

4. Lighting device according to one of claims 1 to 3, **characterized in that** each projection optics (11 - 15; 11a - 15a) is assigned exactly one light source (11' - 15'; 11a' - 15a'), and two or more groups (G1, G2) of projection optics (11 - 15; 11a - 15a) are provided, each group (G1, G2) being provided for generating a defined lighting function, preferably the projection optics (11 - 15; 11a-15a) of the individual groups (G1, G2) are arranged alternately, and wherein preferably the projection optics (11 - 15; 11a - 15a) are each arranged in blocks, wherein each block contains one projection optic (11, 11a; 12, 12a; 13, 13a; 14, 14a; 15, 15a) of each group (G1, G2), and wherein preferably within the blocks of projection optics (11, 11a; 12, 12a; 13, 13a; 14, 14a; 15, 15a) the projection optics each have an identical order with respect to their group.

5. Lighting device according to any one of claims 1 to 4, **characterized in that** projection optics, in particular all projection optics (22 - 26), comprise a reflector or are formed from a reflector, wherein preferably
- in the case of one light source for each reflector, this light source is located in a focal point of the reflector, or
- in the case of two or more light sources (22', 22a',23', 23a', 24', 24a', 25', 25a', 26', 26a') for each reflector (22 - 26)
- one light source (22', 23', 24', 25', 26') is arranged in a focal point of the reflector (22 - 25) and the at least one further light source (22a', 23a', 24a', 25a', 26a') is arranged outside this focal point, or
- the two or more light sources are arranged symmetrically, in particular symmetrically with respect to their light emission surfaces, about a focal point of the reflector.

6. Lighting device according to one of claims 1 to 5, **characterized in that** projection optics, in particular all projection optics (1 - 5; 6 - 10; 11 - 15; 11a - 15a; 16 - 21), each consist of a light-conducting optical body, e.g. of TIR optics, which light-conducting optical bodies comprise at least one light coupling region (101 - 105; 106 -110; 111 - 115; 111a - 115a; 116 - 121) for coupling light from at least one light source (1' - 5'; 6' - 10'; 11' - 15'; 11a' - 15a'; 16' - 21') and at least one light emission surface (201 - 205; 206 - 210; 211 - 215; 211a - 215a; 216 - 221) for coupling out the coupled-in light in the form of a light segment (L1 - L5; M1 - M5) are formed or comprise such a light-conducting optical body.

7. Lighting device according to any one of claims 1 to 6, **characterized in that** all projection optics or all projection optics contributing to a defined lighting function are identically constructed.

8. Lighting device according to one of claims 1 to 7, **characterized in that**
- all light sources (1' - 5'; 6' - 10'; 11' - 15', 11a' - 15a') are arranged on a common printed circuit board (411; 412; 413), or
- all light sources contributing to a defined illumination function are each arranged on a common printed circuit board, or
- all light sources (16' - 21') of a projection optics (414) are each arranged on a common printed circuit board.

9. Lighting device according to any one of claims 1 to 8, **characterized in that** a lighting function is a light function, preferably a turning light ground projection function, such as an auxiliary turning light ground projection function, or, for example, a tail light ground projection function, such as an auxiliary tail light ground projection function. e.g., a rear light ground projection function or auxiliary rear light ground projection function, or a brake light ground projection function, e.g., an auxiliary brake light ground projection function, wherein preferably the light sources for generating an illumination function can emit white light or colored light, e.g., red light.

10. Lighting device according to any one of claims 1 to 9, **characterized in that** the light segments (L1 - L5; M1 - M5) are formed in a lobe shape in a roadway projection, the light segments widening as they run away from the lighting device, the light segments extending preferably
- in front of the lighting device up to a maximum of 10 meters or up to a maximum of 15 meters or up to a maximum of 20 meters or up to a maximum of 25 meters and/or
- laterally, to the left or right of the lighting device, up to a maximum of 10 meters or up to a maximum of 15 meters or up to a maximum of 20 meters or up to a maximum of 25 meters, wherein preferably
the light segments begin at a distance of 0 meter or of 0.5 meter or at a distance of 1 meter in front of the lighting device and/or in the roadway projection begin in an angular range of approximately 20° or -20° to the longitudinal axis of the vehicle and preferably lie in an angular range of 20° to 90° inclusive or -20° to -90° inclusive to the longitudinal axis of the vehicle.

11. Lighting device according to one of claims 1 to 10, **characterized in that** all light segments of a lighting function in a screen projection have approximately the same extension in horizontal direction and/or in vertical direction, preferably identical extension, and/or lie essentially at the same height in vertical direction.

12. Lighting device according to one of claims 1 to 11, **characterized in that** different light segments of an illumination function in a screen projection have different positions in the horizontal direction, wherein light segments adjacent to one another in a common screen projection preferably partially overlap, in particular in the horizontal direction.

13. Lighting device according to one of claims 1 to 12, **characterized in that** after one pass of the activation of the light segments, all light segments are deactivated and, if necessary, one or more further passes are made.

14. Lighting device according to one of claims 12 to 13, **characterized in that** one pass of the activation of the light segments is approximately 200 ms, preferably with a period of approximately 200 ms between two passes of the activation of the light segments.

15. Motor vehicle headlamp having one or more lighting devices according to one of claims 1 to 14.

16. Motor vehicle rear lamp with one or more lighting devices according to one of claims 1 to 14.

17. Motor vehicle having at least one lighting device according to any one of claims 1 to 14 and/or having at least one motor vehicle headlight according to claim 15 and/or having at least one motor vehicle rear light according to claim 16.

## Revendications

1. Dispositif d'éclairage (401, 402, 403, 404, 405), pour un véhicule automobile (1000), pour générer au moins une fonction d'éclairage, une fonction d'éclairage étant une fonction de projection au sol de lumière clignotante, par ex. une fonction de projection au sol de feux clignotants supplémentaires, de préférence les sources lumineuses pour générer la fonction de projection au sol de feux clignotants pouvant émettre une lumière colorée, par exemple une lumière orange ou jaune, le dispositif d'éclairage (401, 402, 403, 404, 405) comprenant :
- deux ou plusieurs optiques de projection (1 - 5 ; 6 -10; 11 - 15, 11a - 15a ; 16 - 21 ; 22 - 26) ;
- des sources lumineuses (1' - 5' ; 6' - 10' ; 11' - 15', 11a' - 15a' ; 16' - 21' ; 22' - 26' ; 22a' - 26a'), chaque optique de projection (1 - 5 ; 6 - 10 ; 11 - 15, 11a - 15a ; 16 - 21 ; 22 - 26) comportant au moins une source lumineuse (1' - 5' ; 6' - 10' ; 11' - 15', 11a' - 15a' ; 16' - 21' ; 22' - 26' ; 22a' - 26a') est associée, chaque source lumineuse comprenant une ou plusieurs diodes électroluminescentes, et chaque source lumineuse associée à une optique de projection contribuant à une fonction d'éclairage définie ;
les optiques de projection (1 - 5 ; 6 - 10 ; 11 - 15, 11a - 15a ; 16 - 21 ; 22 - 26) étant conçues pour projeter la lumière de la source lumineuse ou des sources lumineuses (1' - 5' ; 6' - 10' ; 11' - 15', 11a' - 15a' ; 16' - 21' ; 22' - 26' ; 22a' - 26a') qui leur sont respectivement associées sous la forme de segments lumineux (L1 - L5 ; M1 - M5) dans une projection au sol, c'est-à-dire dans un espace de travail. c'est-à-dire par exemple sur une chaussée, et où
les segments lumineux (L1 - L5 ; M1 - M5) contribuant chacun à une fonction d'éclairage définie sont projetés par les optiques de projection correspondantes (1 - 5 ; 6 - 10; 11 - 15, 11a - 15a; 16 - 21 ; 22 - 26) dans la projection au sol de telle sorte que des segments lumineux (L1 - L5 ; M1-M5) pouvant être générés par des optiques de projection voisines se trouvent directement côte à côte dans cette projection au sol, et où
chaque source lumineuse (1' - 5'; 6' -10'; 11' -15', 11a' - 15a' ; 16' - 21'; 22' - 26'; 22a' - 26a') peut être commandée indépendamment des autres sources lumineuses, où
lors de l'activation d'une fonction d'éclairage combinée comprenant deux fonctions d'éclairage différentes, chaque fonction d'éclairage comprenant respectivement p segments lumineux, avec p ≥ 2, et dans lequel, pour q égal à 1 à p, le q-ième segment lumineux de la première fonction d'éclairage éclaire, dans une projection au sol, sensiblement la même zone que le q-ième segment lumineux de la deuxième fonction d'éclairage, et dans lequel les segments lumineux de la première fonction d'éclairage sont générés avec une première couleur et les segments lumineux de la deuxième fonction d'éclairage sont générés avec une deuxième couleur, la première couleur étant différente de la deuxième, p - 1 segments lumineux de la première fonction d'éclairage sont activés (M2', M3', M4', M5'), et le segment lumineux manquant est généré par la deuxième fonction d'éclairage (M1), et dans lequel, après un temps définissable ou défini, l'un des p - 1 segments lumineux activés de la première fonction d'éclairage ainsi que le segment lumineux de la deuxième fonction d'éclairage sont désactivés (M2', M1), le segment lumineux jusqu'alors inactif de la première fonction d'éclairage est activé (M1), et ce segment lumineux de la deuxième fonction d'éclairage est activé (M2), qui correspond au segment lumineux actuellement désactivé de la première fonction d'éclairage (M2'), sachant que, de préférence, lors de l'activation de la fonction d'éclairage combinée, le premier segment lumineux de la deuxième fonction d'éclairage et, en conséquence, les p - 1 autres segments lumineux de la première fonction d'éclairage sont d'abord générés (M1, M2', M3', M4', M5'), puis, dans l'ordre, le deuxième (M2), le troisième (M3), ... -p-ième segment lumineux de la deuxième fonction d'éclairage et, de manière correspondante, les p-1 segments lumineux de la première fonction d'éclairage sont activés.

2. Dispositif d'éclairage selon la revendication 1, **caractérisé en ce que** chaque diode électroluminescente d'une source lumineuse (1' - 5' ; 6' - 10' ; 11' - 15', 11a' - 15a' ; 16' - 21' ; 22'-26' ; 22a' - 26a') peut être commandée indépendamment des autres diodes électroluminescentes de la source lumineuse.

3. Dispositif d'éclairage selon la revendication 1 ou 2, **caractérisé en ce qu'**à chaque optique de projection (1 - 5; 6 - 10 ; 16 - 21) est associée exactement une source lumineuse (1' - 5' ; 6' - 10' ; 16' - 21'), et **en ce que** toutes les optiques de projection (1 - 5 ; 6 - 10 ; 16 - 21) produisent des segments lumineux d'une seule fonction d'éclairage.

4. Dispositif d'éclairage selon l'une des revendications 1 à 3, **caractérisé en ce qu'**à chaque optique de projection (11 - 15 ; 11a - 15a) est associée exactement une source lumineuse (11' - 15' ; 11a'-15a'), et deux groupes (G1, G2) ou plus d'optiques de projection (11 - 15 ; 11a - 15a) sont prévus, chaque groupe (G1, G2) étant prévu pour générer une fonction d'éclairage définie, les optiques de projection (11 - 15; 11a - 15a) des différents groupes (G1, G2) sont disposées en alternance, et dans lequel de préférence les optiques de projection (11 - 15 ; 11a - 15a) sont disposées respectivement par blocs, chaque bloc comprenant respectivement une optique de projection (11, 11a ; 12, 12a; 13, 13a; 14, 14a; 15, 15a) de chaque groupe (G1, G2), et dans lequel, de préférence, à l'intérieur des blocs d'optiques de projection (11, 11a ; 12, 12a ; 13, 13a ; 14, 14a ; 15, 15a), les optiques de projection présentent chacune un ordre identique en ce qui concerne leur groupe.

5. Dispositif d'éclairage selon l'une des revendications 1 à 4, **caractérisé en ce que** des optiques de projection, notamment toutes les optiques de projection (22-26), comprennent un réflecteur ou sont formées d'un réflecteur, de préférence
- dans le cas d'une source lumineuse pour chaque réflecteur, cette source lumineuse se trouve dans un foyer du réflecteur, ou
- dans le cas de deux ou plusieurs sources lumineuses (22', 22a', 23', 23a', 24', 24a', 25', 25a', 26', 26a') pour chaque réflecteur (22 - 26)
- une source lumineuse (22', 23', 24', 25', 26') est disposée dans un foyer du réflecteur (22 - 25) et l'au moins une autre source lumineuse (22a', 23a', 24a', 25a', 26a') est disposée à l'extérieur de ce foyer ou
- les deux sources lumineuses ou plus sont disposées symétriquement, notamment symétriquement par rapport à leurs surfaces d'émission de lumière, autour d'un point focal du réflecteur.

6. Dispositif d'éclairage selon l'une des revendications 1 à 5, **caractérisé en ce que** des optiques de projection, en particulier toutes les optiques de projection (1 - 5 ; 6 - 10 ; 11 - 15 ; 11a - 15a ; 16-21), sont constituées chacune d'un corps optique conducteur de lumière, par ex. d'optiques TIR, lesquels corps optiques conducteurs de lumière comportent au moins une zone de couplage de lumière (101 -105; 106 -110; 111 - 115 ; 111a - 115a ; 116 -121) pour le couplage de lumière d'au moins une source lumineuse (1' - 5'; 6' - 10' ;11' -15' ;11a' - 15a' ;16' - 21') et au moins une surface de sortie de lumière (201 - 205 ; 206 - 210; 211 - 215; 211a - 215a; 216 - 221) pour découpler la lumière injectée sous la forme d'un segment de lumière (L1 - L5 ; M1 - M5), ou comprennent un tel corps optique conducteur de lumière.

7. Dispositif d'éclairage selon l'une des revendications 1 à 6, **caractérisé en ce que** toutes les optiques de projection ou toutes les optiques de projection qui contribuent à une fonction d'éclairage définie ont une structure identique.

8. Dispositif d'éclairage selon l'une des revendications 1 à 7, **caractérisé en ce que**
- toutes les sources de lumière (1' - 5' ; 6' - 10' ; 11' - 15', 11a' - 15a') sont disposées sur une carte de circuit imprimé commune (411 ; 412 ; 413), ou
- toutes les sources lumineuses qui contribuent à une fonction d'éclairage définie sont disposées chacune sur une carte de circuit imprimé commune, ou
- toutes les sources lumineuses (16' - 21') d'une optique de projection (414) sont disposées chacune sur une carte de circuit imprimé commune.

9. Dispositif d'éclairage selon l'une des revendications 1 à 8, **caractérisé en ce qu'**une fonction d'éclairage est une fonction d'éclairage, de préférence une fonction de projection au sol de feux de virage, par exemple une fonction de projection au sol de feux de virage supplémentaires, ou par exemple une fonction de projection au sol de feux arrière, par exemple une fonction de projection au sol de feux arrière supplémentaires, comme par exemple une fonction de projection au sol de feux arrière supplémentaires, par exemple une fonction de projection au sol des feux de recul ou une fonction de projection au sol des feux de recul supplémentaires ou une fonction de projection au sol des feux de stop, par exemple une fonction de projection au sol des feux de stop supplémentaires, les sources lumineuses pouvant de préférence émettre une lumière blanche ou une lumière colorée, par exemple une lumière rouge, pour générer une fonction d'éclairage.

10. Dispositif d'éclairage selon l'une des revendications 1 à 9, **caractérisé en ce que** les segments lumineux (L1 - L5 ; M1 - M5) sont réalisés en forme de lobe dans une projection de la chaussée, les segments lumineux s'élargissant en s'éloignant du dispositif d'éclairage, les segments lumineux s'étendant de préférence de manière continue jusqu'à l'extérieur du dispositif d'éclairage.
- devant le dispositif d'éclairage jusqu'à 10 mètres au maximum ou jusqu'à 15 mètres au maximum ou jusqu'à 20 mètres au maximum ou jusqu'à 25 mètres au maximum et/ou
- latéralement, à gauche ou à droite du dispositif d'éclairage, jusqu'à 10 mètres au maximum ou jusqu'à 15 mètres au maximum ou jusqu'à 20 mètres au maximum ou jusqu'à 25 mètres au maximum, où de préférence
les segments lumineux commencent à une distance de 0 mètre ou de 0,5 mètre ou à une distance de 1 mètre devant le dispositif d'éclairage et/ou commencent, dans la projection de la chaussée, dans une plage angulaire d'environ 20° ou -20° par rapport à l'axe longitudinal du véhicule et se situent de préférence dans une plage angulaire de 20° à 90° inclus ou de -20° à -90° inclus par rapport à l'axe longitudinal du véhicule.

11. Dispositif d'éclairage selon l'une quelconque des revendications 1 à 10, **caractérisé en ce que** tous les segments lumineux d'une fonction d'éclairage dans une projection d'écran présentent approximativement la même étendue dans la direction horizontale et/ou dans la direction verticale, de préférence une étendue identique, et/ou sont situés sensiblement à la même hauteur dans la direction verticale.

12. Dispositif d'éclairage selon l'une des revendications 1 à 11, **caractérisé en ce que** différents segments lumineux d'une fonction d'éclairage présentent dans une projection d'écran des positions différentes dans la direction horizontale, des segments lumineux voisins les uns des autres dans une projection d'écran commune se chevauchant de préférence partiellement, en particulier dans la direction horizontale.

13. Dispositif d'éclairage selon l'une des revendications 1 à 12, **caractérisé en ce qu'**après un passage d'activation des segments lumineux, tous les segments lumineux sont désactivés et, le cas échéant, un ou plusieurs passages supplémentaires sont effectués.

14. Dispositif d'éclairage selon l'une des revendications 12 à 13, **caractérisé en ce qu'**un passage d'activation des segments lumineux est d'environ 200 ms, de préférence avec une durée d'environ 200 ms entre deux passages d'activation des segments lumineux.

15. Projecteur de véhicule automobile comportant un ou plusieurs dispositifs d'éclairage selon l'une quelconque des revendications 1 à 14.

16. Projecteur arrière de véhicule automobile comportant un ou plusieurs dispositifs d'éclairage selon l'une quelconque des revendications 1 à 14.

17. Véhicule automobile comportant au moins un dispositif d'éclairage selon l'une des revendications 1 à 14 et/ou au moins un projecteur de véhicule automobile selon la revendication 15 et/ou au moins un feu arrière de véhicule automobile selon la revendication 16.
